# EUROPEAN PATENT SPECIFICATION

(11) **EP 3 553 324 B1**
(45) Date of publication and mention of the grant of the patent: **15.09.2021**
(21) Application number: 19166519.9
(22) Date of filing: 01.04.2019
(51) Int. Cl.: F15B 13/02, F15B 13/04

(54) **VALVE AND HYDRAULIC SYSTEM WITH THE SAME**
VENTIL UND HYDRAULISCHES SYSTEM DAMIT
SOUPAPE ET SYSTÈME HYDRAULIQUE ÉQUIPÉ DE CELLE-CI

(30) Priority: 13.04.2018 CN 201810335255
(43) Date of publication of application: 16.10.2019
(73) Proprietor: Danfoss Power Solutions (Zhejiang) Co. Ltd, Wuyuan New Zone Haiyan, Zhejiang 314300 (CN)
(72) Inventor: Ma, Zhongxiao, Wuyuan New Zone Haiyan, Zhejiang, 314300 (CN); Zhai, Likui, Wuyuan New Zone Haiyan, Zhejiang, 314300 (CN)
(74) Representative: Keil & Schaafhausen Patentanwälte PartGmbB

(56) References cited:
- EP-A1- 1 108 895
- WO-A1-2007/090522
- DE-A1- 2 649 775
- DE-A1- 3 014 202

## Description

### TECHNICAL FIELD

Embodiments of the present invention relate to a valve and a hydraulic system with the same.

A valve according to the preamble of claim 1 is known, for example, from WO 2007/090522 A1, DE 26 49 775 A1 or DE 30 14 202 A1.

### BACKGROUND

Generally, a conventional counterbalance valve is disposed in a hydraulic system as a separate valve.

### SUMMARY

An object of embodiments of the present invention is to provide a valve in which a counterbalance valve is integrated.

This object is solved with a valve according to claim 1.

According to the embodiments of the present invention, the counterbalance valve is integrated in the valve.

Embodiments of the present invention further provide a hydraulic system comprising: the valve.

### BRIEF DESCRIPTION OF THE DRAWINGS

FIG. 1 is a schematic sectional view of a valve in a state where a main valve spool is in a middle main valve spool position according to an embodiment of the present invention, which is taken along a first axial section of the valve;
FIG. 2 is a schematic sectional view of the valve in the state where the main valve spool is in the middle main valve spool position according to the embodiment of the present invention, which is taken along a second axial section of the valve rotated through about 45 degrees relative to the first axial section around an axis of the valve;
FIG. 3 is a schematic sectional view of the valve in the state where the main valve spool is in the middle main valve spool position according to the embodiment of the present invention, which is taken along a third axial section of the valve rotated through about 90 degrees relative to the first axial section around the axis of the valve;
FIG. 4 is a schematic sectional view of the valve in the state where the main valve spool is in the middle main valve spool position according to the embodiment of the present invention, which is taken along a fourth axial section of the valve rotated through about 135 degrees relative to the first axial section around the axis of the valve;
FIG. 5 is a schematic diagram of a hydraulic system according to an embodiment of the present invention, which shows the schematic sectional view of the valve in the state where the main valve spool is in the middle main valve spool position, taken along the first axial section of the valve;
FIG. 6 is a schematic diagram of the hydraulic system according to the embodiment of the present invention, which shows the schematic sectional view of the valve in the state where the main valve spool is in the middle main valve spool position, taken along the second axial section of the valve;
FIG. 7 is a schematic diagram of the hydraulic system according to the embodiment of the present invention, which shows the schematic sectional view of the valve in the state where the main valve spool is in the middle main valve spool position, taken along the third axial section of the valve;
FIG. 8 is a schematic diagram of the hydraulic system according to the embodiment of the present invention, which shows the schematic sectional view of the valve in the state where the main valve spool is in the middle main valve spool position, taken along the fourth axial section of the valve;
FIG. 9 is a schematic sectional view of the valve in a state where the main valve spool is in a second main valve spool position according to the embodiment of the present invention, which is taken along the first axial section of the valve;
FIG. 10 is a schematic sectional view of the valve in the state where the main valve spool is in the second main valve spool position according to the embodiment of the present invention, which is taken along the second axial section of the valve;
FIG. 11 is a schematic sectional view of the valve in the state where the main valve spool is in the second main valve spool position according to the embodiment of the present invention, which is taken along the third axial section of the valve;
FIG. 12 is a schematic sectional view of the valve in the state where the main valve spool is in the second main valve spool position according to the embodiment of the present invention, which is taken along the fourth axial section of the valve;
FIG. 13 is a schematic diagram of the hydraulic system according to the embodiment of the present invention, which shows the schematic sectional view of the valve in the state where the main valve spool is in the second main valve spool position, taken along the first axial section of the valve;
FIG. 14 is a schematic diagram of the hydraulic system according to the embodiment of the present invention, which shows the schematic sectional view of the valve in the state where the main valve spool is in the second main valve spool position, taken along the second axial section of the valve;
FIG. 15 is a schematic diagram of the hydraulic system according to the embodiment of the present invention, which shows the schematic sectional view of the valve in the state where the main valve spool is in the second main valve spool position, taken along the third axial section of the valve;
FIG. 16 is a schematic diagram of the hydraulic system according to the embodiment of the present invention, which shows the schematic sectional view of the valve in the state where the main valve spool is in the second main valve spool position, taken along the fourth axial section of the valve;
FIG. 17 is a schematic sectional view of the valve in a state where the main valve spool is in a first main valve spool position according to the embodiment of the present invention, which is taken along the first axial section of the valve;
FIG. 18 is a schematic sectional view of the valve in the state where the main valve spool is in the first main valve spool position according to the embodiment of the present invention, which is taken along the second axial section of the valve;
FIG. 19 is a schematic sectional view of the valve in the state where the main valve spool is in the first main valve spool position according to the embodiment of the present invention, which is taken along the third axial section of the valve;
FIG. 20 is a schematic sectional view of the valve in the state where the main valve spool is in the first main valve spool position according to the embodiment of the present invention, which is taken along the fourth axial section of the valve;
FIG. 21 is a schematic diagram of the hydraulic system according to the embodiment of the present invention, which shows the schematic sectional view of the valve in the state where the main valve spool is in the first main valve spool position, taken along the first axial section of the valve;
FIG. 22 is a schematic diagram of the hydraulic system according to the embodiment of the present invention, which shows the schematic sectional view of the valve in the state where the main valve spool is in the first main valve spool position, taken along the second axial section of the valve;
FIG. 23 is a schematic diagram of the hydraulic system according to the embodiment of the present invention, which shows the schematic sectional view of the valve in the state where the main valve spool is in the first main valve spool position, taken along the third axial section of the valve; and
FIG. 24 is a schematic diagram of the hydraulic system according to the embodiment of the present invention, which shows the schematic sectional view of the valve in the state where the main valve spool is in the first main valve spool position, taken along the fourth axial section of the valve.

### DETAILED DESCRIPTION

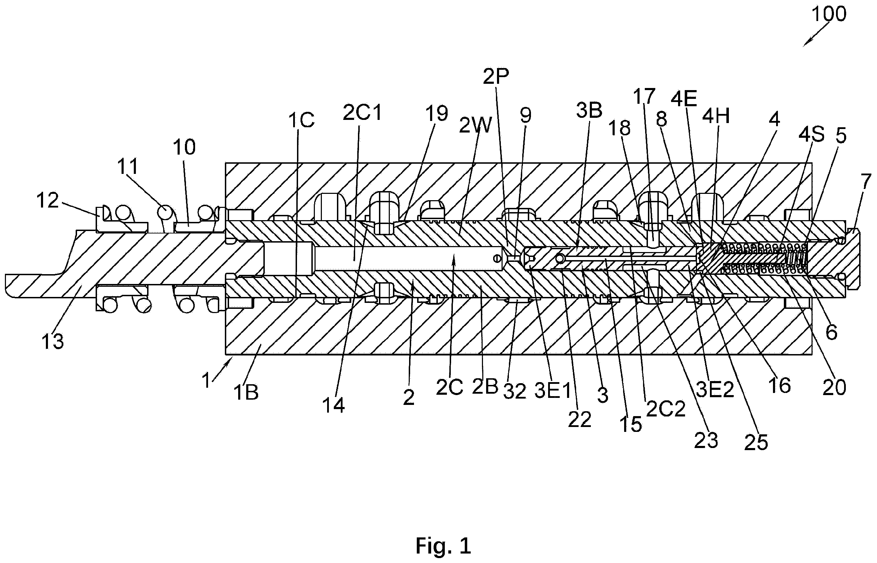

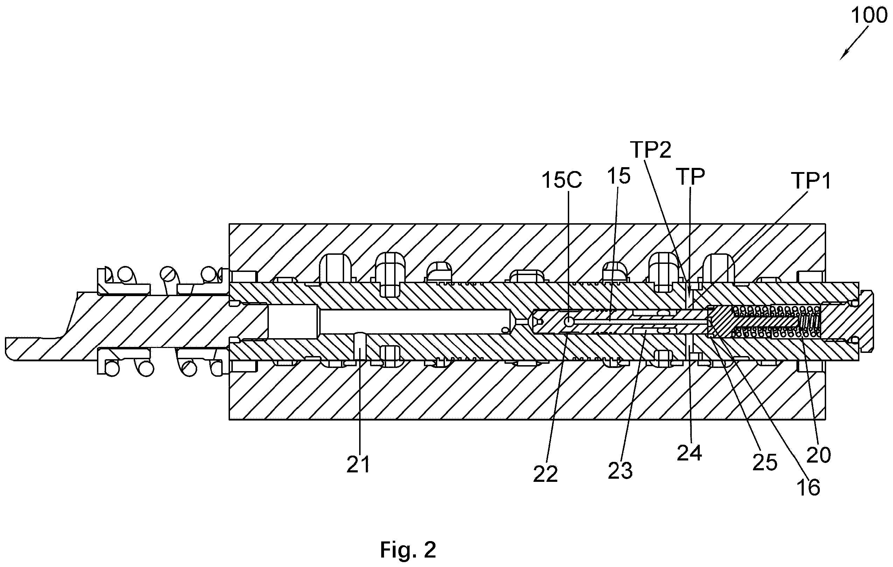

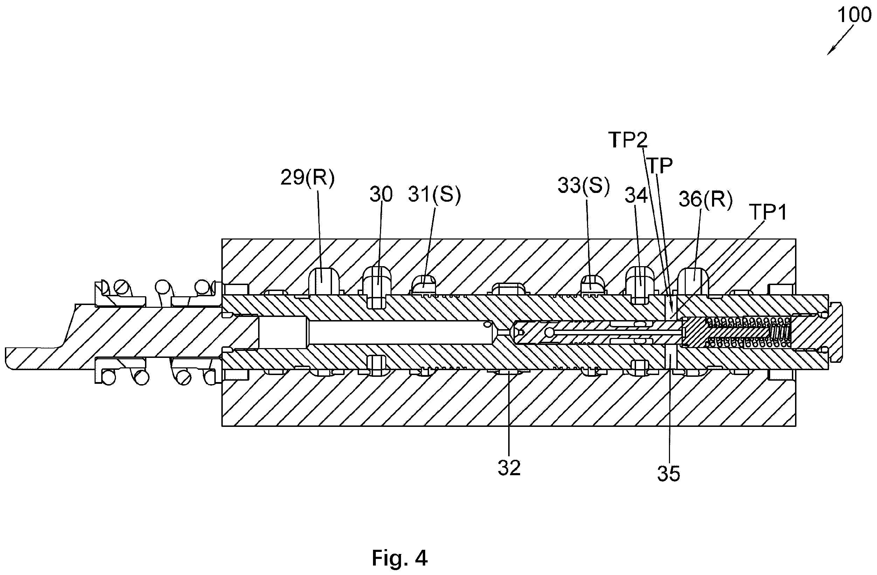

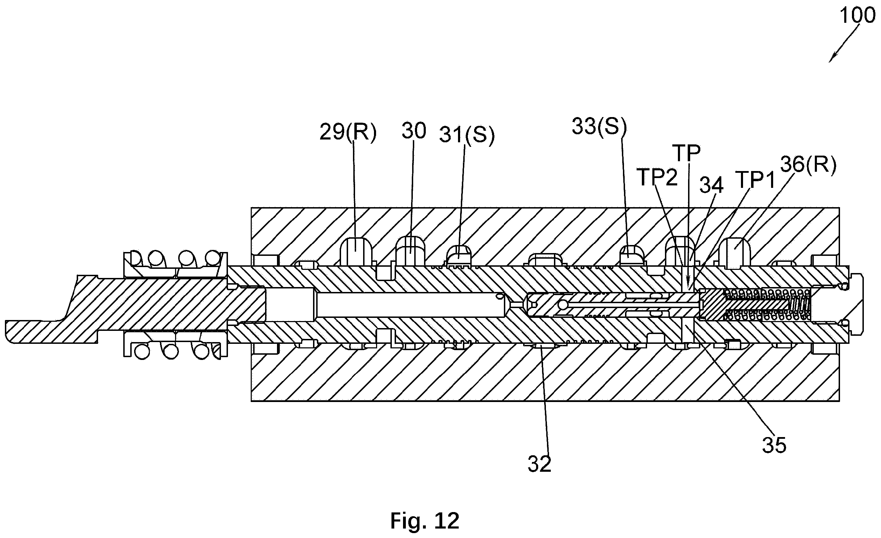

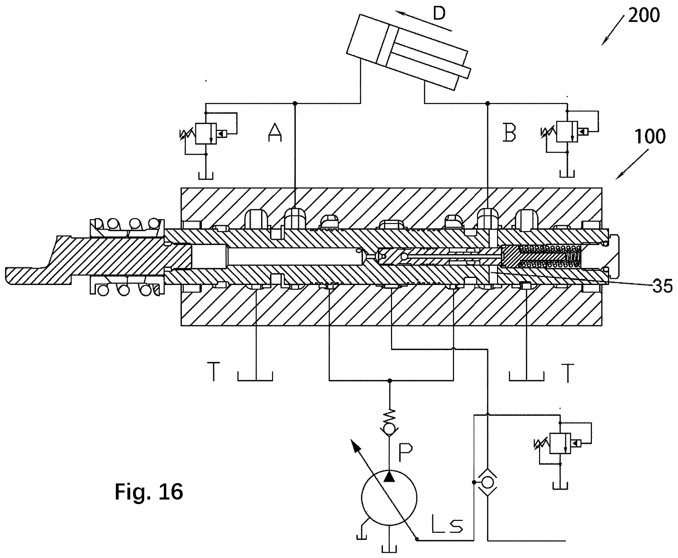

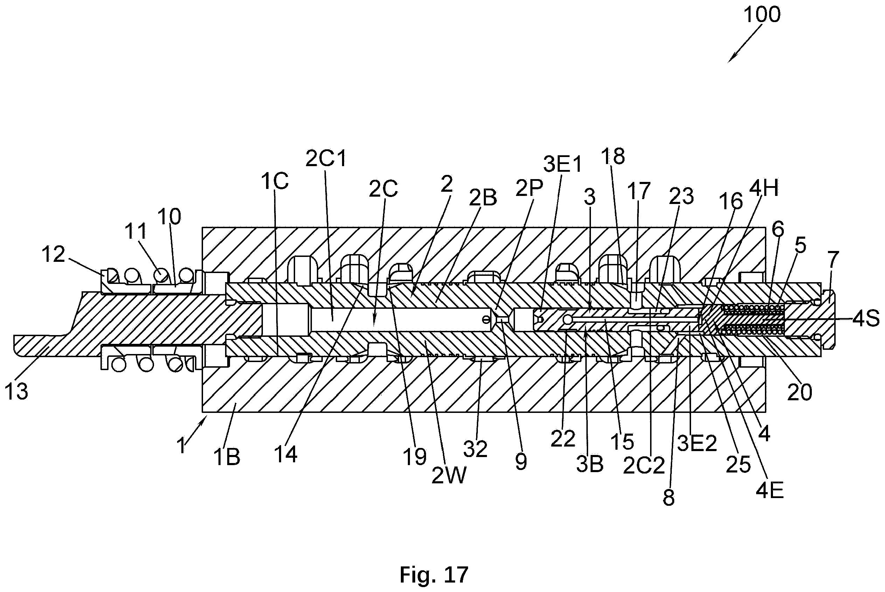

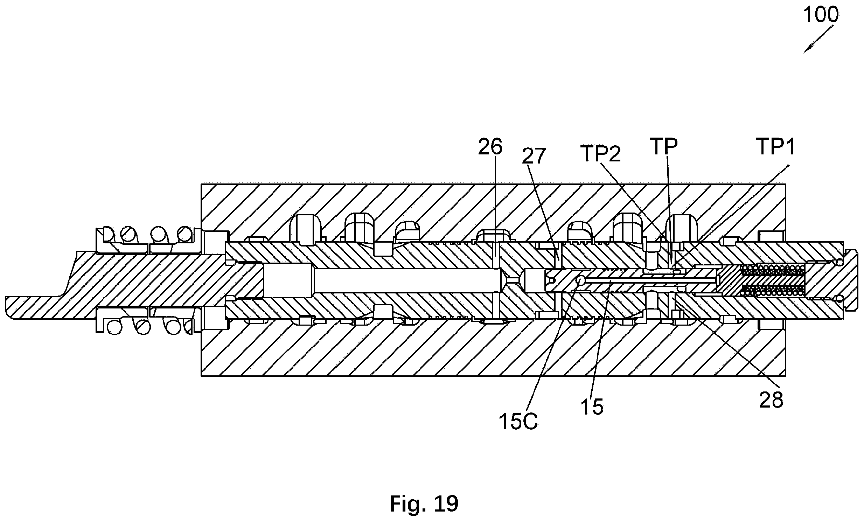

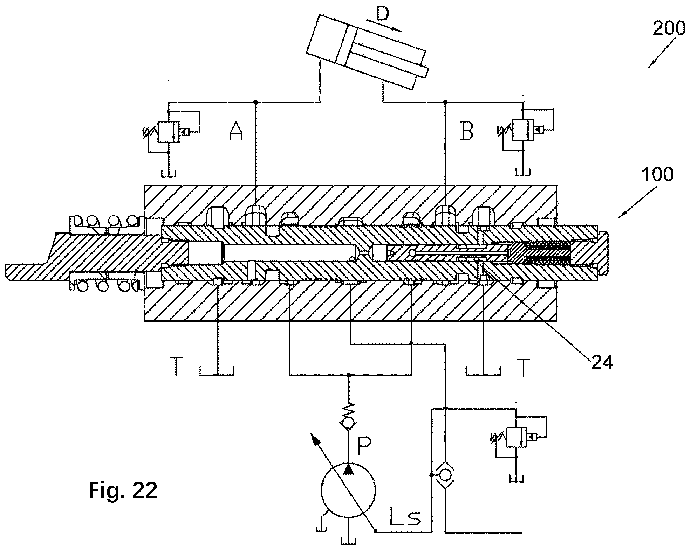

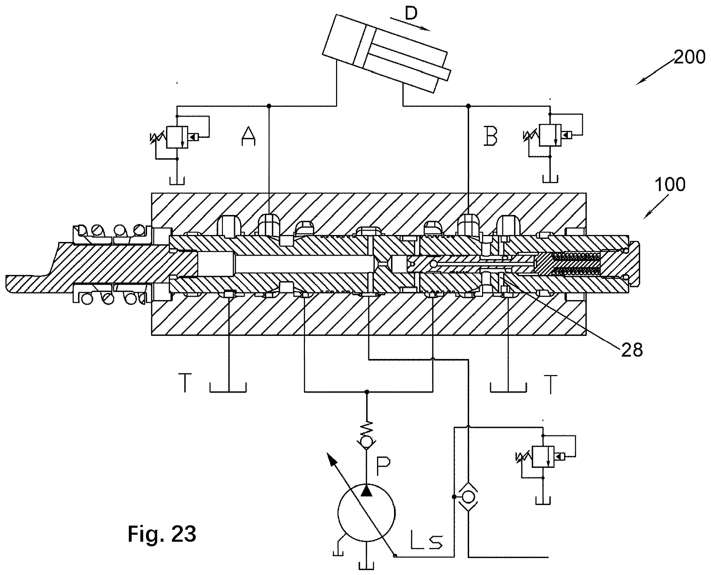

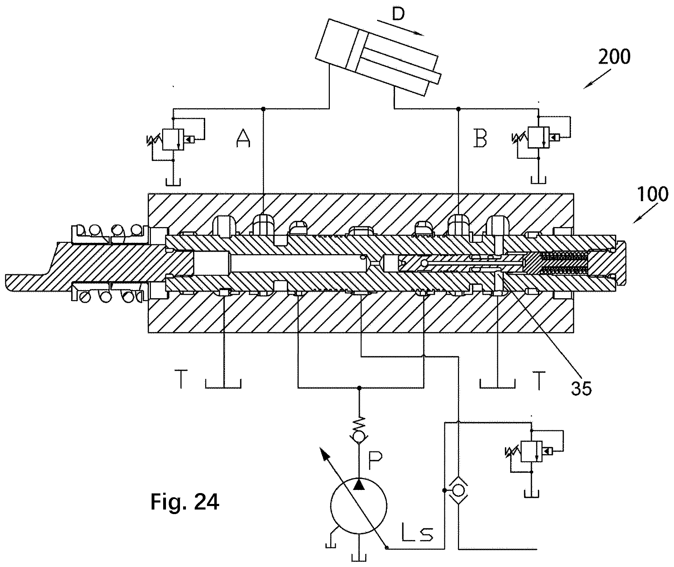

As shown in FIGS. 1-24, a valve 100 according to an embodiment of the present invention includes: a valve casing 1, a main valve spool 2 and a counterbalance valve spool 3. The valve casing 1 includes: a valve casing body 1B, a main valve bore 1C extending in an axial direction in the valve casing body 1B; and a first working port (for example a port A) 30, a second working port (for example a port B) 34, a supply port (for example a port P) S and a return port (for example a port T) R formed in the valve casing body 1B (referring to FIG.4). The main valve spool 2 is disposed in the main valve bore 1C of the valve casing 1 and is slidable in the main valve bore 1C to change the communication status between each of the first and second working ports 30 and 34 and each of the supply and return ports S and R, and the main valve spool 2 includes: a main valve spool body 2B, a main valve spool internal cavity 2C extending in the axial direction in the main valve spool body 2B; a main valve spool wall 2W surrounding the main valve spool internal cavity 2C; an inlet passage 17 which passes through the main valve spool wall 2W in a direction crossing the axial direction and which is configured for the second working port 34; and an outlet passage TP which passes through the main valve spool wall 2W in a direction crossing the axial direction and which has an inlet TP1 towards the main valve spool internal cavity 2C and an outlet TP2 towards the valve casing body 1B (referring to FIG.2). The counterbalance valve spool 3 is disposed in the main valve spool internal cavity 2C of the main valve spool 2 and is slidable between a first counterbalance valve spool position (i.e. the position shown in FIGS. 1-16) and a second counterbalance valve spool position (i.e. the position shown in FIGS. 17-24). The counterbalance valve spool 3 includes: a counterbalance valve spool body 3B; and a first counterbalance valve spool recess 23 formed on an outer periphery of the counterbalance valve spool body 3B. In a state where the counterbalance valve spool 3 is in the first counterbalance valve spool position, the inlet TP1 of the outlet passage TP of the main valve spool 2 is closed by the counterbalance valve spool 3; and in a state where the counterbalance valve spool 3 is in the second counterbalance valve spool position, the inlet TP1 of the outlet passage TP of the main valve spool 2 is opened by the counterbalance valve spool 3 through the first counterbalance valve spool recess 23 of the counterbalance valve spool 3, so that the second working port 34 is in communication with the return port R through the inlet passage 17 configured for the second working port 34, the first counterbalance valve spool recess 23 and the outlet passage TP. Thereby, a hydraulic fluid (for example hydraulic oil) from the second working port 34 enters the return port R through the inlet passage 17 configured for the second working port 34, the first counterbalance valve spool recess 23 and the outlet passage TP by being throttled by the outlet passage TP (referring to FIG. 19) . The counterbalance valve spool 3 and the main valve spool 2 constitute a counterbalance valve. The valve 100 may be a load sensing valve or a load sensing multiple valve. The first counterbalance valve spool recess 23 is configured to supply a fluid to the counterbalance valve. The inlet passage 17 may extend in a radial direction of the main valve spool body 2B. The main valve spool body 2B may have a substantially cylindrical shape. A second working port inlet throttling groove 18 (as shown in FIG. 1) is in communication with the inlet passage 17. The first counterbalance valve spool recess 23 may be an annular recess surrounding the outer periphery of the counterbalance valve spool body 3B, or a recess extending along a portion, in a peripheral or circumferential direction, of the outer periphery of the counterbalance valve spool body 3B. A chamber is formed by the first counterbalance valve spool recess 23 and an inner wall of a second main spool internal cavity 2C2 of the main valve spool body 2B. The outlet passage TP may extend substantially in the radial direction of the main valve spool body 2B. The outlet passage TP may be a throttling passage. The valve 100 may be a hydraulic control valve or the like.

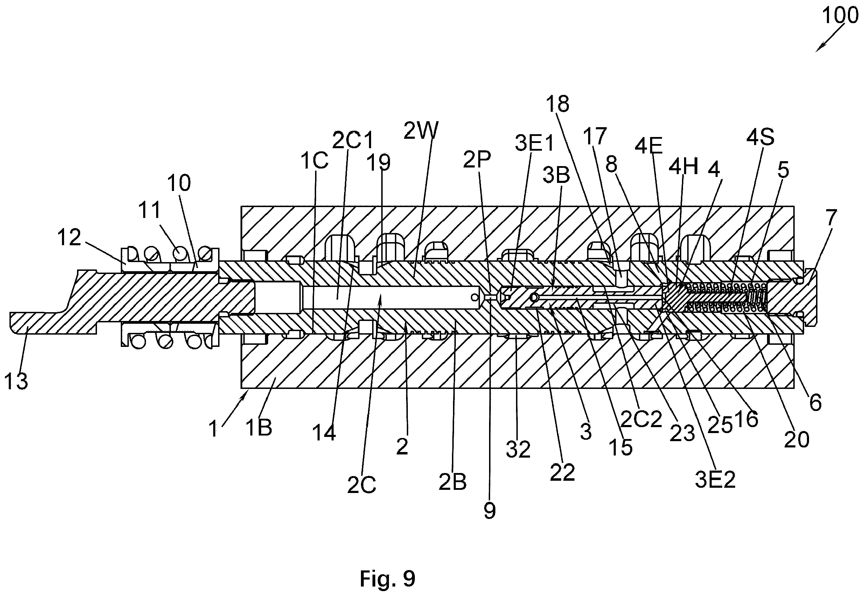

As shown in FIGS. 1-24, according to an embodiment of the present invention, the supply port S includes a first supply port 31 and a second supply port 33, and the return port R includes a first return port 29 and a second return port 36 (referring to FIG. 4). The main valve spool 2 is slidable among a first main valve spool position (i.e. the position shown in FIGS. 17-24), a middle main valve spool position (i.e. the position shown in FIGS. 1-8) and a second main valve spool position (i.e. the position shown in FIGS. 9-16) to change the communication status between the first working port 30 and each of the first supply port 31 and first return port 29, and the communication status between the second working port 34 and each of the second supply port 33 and second return port 36. In a state where the main valve spool 2 is in the first main valve spool position (i.e. the position shown in FIGS. 17-24), the first working port 30 is in communication with the first supply port 31, the counterbalance valve spool 3 is in the second counterbalance valve spool position (i.e. the position shown in FIGS. 17-24), and the second working port 34 is in communication with the second return port 36 through the inlet passage 17 configured for the second working port 34, the first counterbalance valve spool recess 23 and the outlet passage TP (referring to FIG. 19). Thereby, a hydraulic fluid (for example the hydraulic oil) from the second working port 34 enters the second return port 36 through the inlet passage 17 configured for the second working port 34, the first counterbalance valve spool recess 23 and the outlet passage TP by being throttled by the outlet passage TP. In a state where the main valve spool 2 is in the middle main valve spool position (i.e. the position shown in FIGS. 1-8), the counterbalance valve spool 3 is in the first counterbalance valve spool position (i.e. the position shown in FIGS. 1-16), and the first working port 30 and the second working port 34 are disconnected from the first supply port 31 and the second supply port 33, respectively. In a state where the main valve spool 2 is in the second main valve spool position (i.e. the position shown in FIGS. 9-16), the counterbalance valve spool 3 is in the first counterbalance valve spool position (i.e. the position shown in FIGS. 1-16), the first working port 30 is in communication with the first return port 29, and the second working port 34 is in communication with the second supply port 33. The first supply port 31 and the second supply port 33 may be in communication with each other, and the first return port 29 and the second return port 36 may be in communication with each other. In the figures, T denotes an oil tank, and A and B denote the port A and the port B, respectively. The first supply port 31, the second supply port 33, the first return port 29, the second return port 36, the first working port (for example the port A) 30, and the second working port (for example the port B) 34 may be formed by recesses formed on an inner wall of the main valve bore 1C of the valve casing body 1B. Each of the recesses may be formed on all or part of a circumference of the inner wall of the main valve bore 1C of the valve casing body 1B in a circumferential direction. In the embodiment, the main valve spool 2 is slidable among the first main valve spool position, the middle main valve spool position and the second main valve spool position to control the communications and the non-communications between the working ports and the supply and return ports S and R. However, the main valve spool 2 may switch between two main valve spool positions or among four or more main valve spool positions to control communications and non-communications between working ports and supply and return ports S and R.

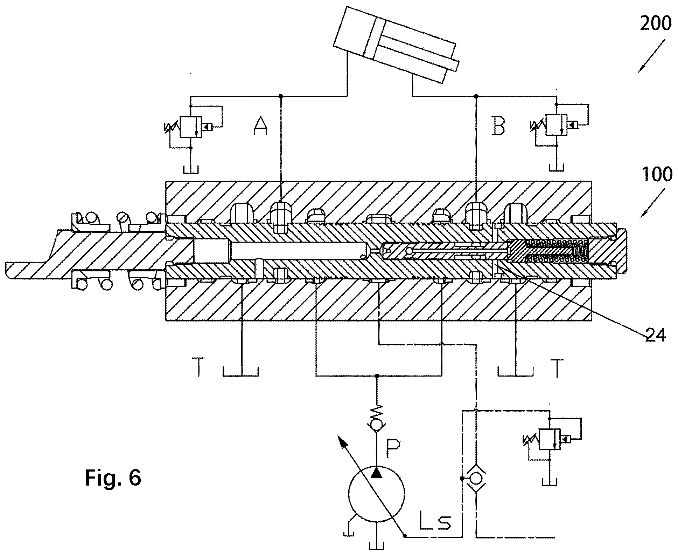

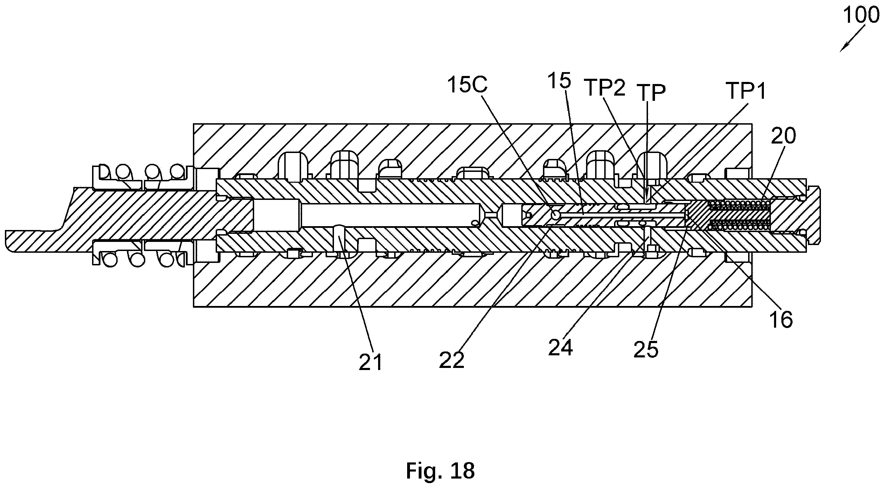

As shown in FIGS. 1-24, according to an embodiment of the present invention, the outlet passage TP includes a plurality of sub-outlet passages 24, 28 and 35 (as shown in FIGS. 6, 7 and 8) arranged in the axial direction, such that the greater a distance which the counterbalance valve spool 3 slides in a direction from the first counterbalance valve spool position towards the second counterbalance valve spool position is, the more sub-outlet passages 24, 28 and 35 are opened, and thus the greater a total flow area of these opened sub-outlet passages is (Referring to FIGS. 18-20 and 22-24). In this case, the second working port 34 is in communication with the first counterbalance valve spool recess 23 through the inlet passage 17 configured for the second working port 34. For example, the sub-outlet passages 24, 28 and 35 may be two, three or more sub-outlet passages. The outlet passage TP may be one outlet passage TP, or two or more outlet passages TP in substantially the same axial position, and each of the sub-outlet passages 24, 28 and 35 may be one sub-outlet passage, or two or more sub-outlet passages in substantially the same axial position. The inlet passage 17 configured for the second working port 34 may be one inlet passage 17, or two or more inlet passages 17 in substantially the same axial position. The sub-outlet passages 24, 28 and 35 may be sub-throttling passages.

As shown in FIGS. 17-24, according to an embodiment of the present invention, the main valve spool internal cavity 2C of the main valve spool 2 includes: first and second main valve spool internal cavities 2C1 and 2C2 extending in the axial direction in the main valve spool body 2B; a main valve spool internal cavity partition wall 2P between the first and second main valve spool internal cavities 2C1 and 2C2; a main valve spool internal cavity partition wall through hole 9 formed in the main valve spool internal cavity partition wall 2P and communicating the first main valve spool internal cavity 2C1 with the second main valve spool internal cavity 2C2; and a counterbalance valve spring cavity 20 extending from the second main valve spool internal cavity 2C2 in a direction away from the first main valve spool internal cavity 2C1. The counterbalance valve spool 3 is disposed in the second main valve spool internal cavity 2C2 of the main valve spool 2, and has a first end 3E1 adjacent to the main valve spool internal cavity partition wall 2P of the main valve spool 2, and a second end 3E2 opposite to the first end 3E1. The valve 100 further includes: a counterbalance valve spring seat 4 disposed in the counterbalance valve spring cavity 20 of the main valve spool 2 and having an end 4E facing towards the counterbalance valve spool 3; and counterbalance valve springs 5 and 6 disposed in the counterbalance valve spring cavity 20 of the main valve spool 2 and configured to apply a force to the counterbalance valve spring seat 4 to bias the counterbalance valve spring seat 4 towards the counterbalance valve spool 3, so that the end 4E of the counterbalance valve spring seat 4 abuts against the second end 3E2 of the counterbalance valve spool 3 and applies a pushing force to the counterbalance valve spool 3 in a direction from the second counterbalance valve spool position towards the first counterbalance valve spool position. The main valve spool internal cavity partition wall through hole 9 may be a damping hole, or any other appropriate through hole. The main valve spool internal cavity partition wall through hole 9 may extend substantially in the axial direction. Although the two counterbalance valve springs 5 and 6 are shown in the figures, a single counterbalance valve spring may be used. An opening pressure of the counterbalance valve is determined by the counterbalance valve springs 5 and 6. The damping hole may be configured to reduce an impact pressure when the counterbalance valve is opened. The first end 3E1 may have a shape of a truncated cone.

As shown in FIGS. 17-24, according to an embodiment of the present invention, the main valve spool 2 further includes a first working port pressure acquisition hole 21 (as shown in FIG. 18) which passes through the main valve spool wall 2W of the main valve spool 2 in a direction crossing the axial direction. In the state where the main valve spool 2 in the main valve bore 1C is in the first main valve spool position, the first working port pressure acquisition hole 21 communicates the first working port 30 with the first main valve spool internal cavity 2C1 of the main valve spool 2. The first working port pressure acquisition hole 21 is configured to acquire a pressure value of the first working port 30 in operation. The first working port pressure acquisition hole 21 may extend substantially in the radial direction of the main valve spool body 2B.

As shown in FIGS. 17-24, according to an embodiment of the present invention, the main valve spool 2 further includes a second working port pressure acquisition hole (for example a load sensing (LS) pressure acquisition hole for the port B) 8 (as shown in FIG. 17) which passes through the main valve spool wall 2W of the main valve spool 2 in a direction crossing the axial direction. In the state where the main valve spool 2 in the main valve bore 1C is in the first main valve spool position, the second working port pressure acquisition hole 8 communicates the counterbalance valve spring cavity 20 with the second return port 36. The second working port pressure acquisition hole 8 is configured to acquire a size of a pressure value of the second working port 34 in operation. The second working port pressure acquisition hole 8 may extend obliquely to the axial direction.

As shown in FIGS. 17-24, especially as shown in FIG. 17, according to an embodiment of the present invention, the counterbalance valve spring seat 4 includes: a head 4H having the end 4E facing towards the counterbalance valve spool 3; and a rod 4S inserted into the counterbalance valve springs, and the main valve spool 2 further includes a plug 7 which closes an end of the main valve spool internal cavity 2C of the main valve spool 2, and which is configured to restrict, by an abutment against the rod 4S of the counterbalance valve spring seat 4, a distance which the counterbalance valve spring scat 4 slides, and thus a distance which the counterbalance valve spool 3 slides in a direction from the first counterbalance valve spool position towards the second counterbalance valve spool position. Thereby, guiding of the springs can be improved, and a position of the counterbalance valve spool can also be controlled more accurately, preventing the counterbalance valve spool from moving out of a normal operating range due to a pressure fluctuation so that a load is abruptly stopped.

As shown in FIGS. 17-24, according to an embodiment of the present invention, the counterbalance valve spring cavity 20 of the main valve spool 2 has a greater cross-sectional size than the second main spool internal cavity 2C2. In the state where the main valve spool 2 in the main valve bore 1C is in the first main valve spool position, the counterbalance valve spool 3 is in the second counterbalance valve spool position so that the second end 3E2 of the counterbalance valve spool 3 enters the counterbalance valve spring cavity 20, and the counterbalance valve spring cavity 20 is in communication with the second return port 36 through a gap between the counterbalance valve spring seat 4 and the inner wall of the counterbalance valve spring cavity 20 of the main valve spool 2, a gap between the counterbalance valve spool 3 and the inner wall of the counterbalance valve spring cavity 20 of the main valve spool 2, and the second working port pressure acquisition hole 8. Specifically, according to an embodiment of the present invention, the counterbalance valve spring seat 4 further includes: a counterbalance valve spring seat recess 25 (as shown in FIGS. 17 and 18) formed at an end surface of the end 4E on an outer periphery of the end 4E. The counterbalance valve spring cavity 20 is in communication with the second return port 36 through the gap between the counterbalance valve spring seat 4 and the inner wall of the counterbalance valve spring cavity 20 of the main valve spool 2, the gap between the counterbalance valve spool 3 and the inner wall of the counterbalance valve spring cavity 20 of the main valve spool 2, the counterbalance valve spring seat recess 25, and the second working port pressure acquisition hole 8. For example, each of the first main valve spool internal cavity 2C1, the second main valve spool internal cavity 2C2 and the counterbalance valve spring cavity 20 may have a circular cross section. The counterbalance valve spring seat recess 25 may be an annular recess surrounding the outer periphery of the counterbalance valve spring seat 4, or a recess extending along a portion, in a peripheral or circumferential direction, of the outer periphery of the counterbalance valve spring seat 4. A chamber is formed by the counterbalance valve spring seat recess 25 and the inner wall of the counterbalance valve spring cavity 20. A diameter of the second end 3E2 of the counterbalance valve spool 3 may be less than or equal to a diameter of a bottom of the counterbalance valve spring seat recess 25.

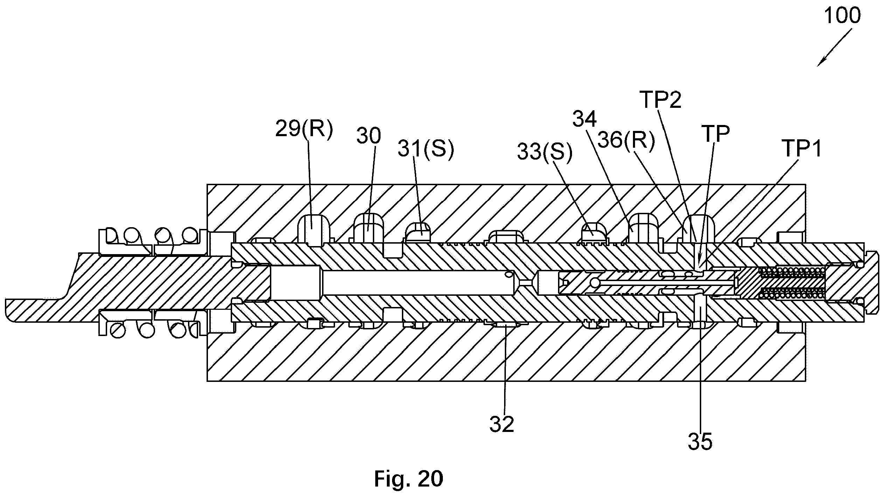

As shown in FIGS. 17-24, according to an embodiment of the present invention, the valve casing 1 further includes a working port pressure detection cavity 32 (as shown in FIG. 17 and 20) formed in the valve casing body 1B, and the main valve spool 2 further includes a first working port pressure feedback hole 26 (as shown in FIG. 19) which passes through the main valve spool wall 2W of the main valve spool 2 in a direction crossing the axial direction. In the state where the main valve spool 2 in the main valve bore 1C is in the first main valve spool position, the first working port pressure feedback hole 26 communicates the first main valve spool internal cavity 2C1 with the working port pressure detection cavity 32 so that the working port pressure detection cavity 32 is in communication with the first working port 30 through the first working port pressure feedback hole 26, the first main valve spool internal cavity 2C1 and the first working port pressure acquisition hole 21 (as shown in FIG. 18). The first working port pressure feedback hole 26 may be configured to feed back a pressure acquired by the first working port pressure acquisition hole 21 to the working port pressure detection cavity 32. The working port pressure detection cavity (for example an LS chamber) 32 is configured to feed back the pressure to a pump. The first working port pressure feedback hole 26 may extend substantially in the radial direction of the main valve spool body 2B. The working port pressure detection cavity 32 may be formed by a recess formed on the inner wall of the main valve bore 1C of the valve casing body 1B. The recess may be formed on all or part of the circumference of the inner wall of the main valve bore 1C of the valve casing body 1B in the circumferential direction.

As shown in FIGS. 1-24, according to an embodiment of the present invention, the valve 100 further includes a connection hole extending in the axial direction in an end of the main valve spool body 2B, for example a connection hole extending from the first main valve spool internal cavity 2C1 in a direction away from the second main valve spool internal cavity 2C2. The valve 100 further includes a biasing assembly configured to apply a force to the main valve spool 2 so as to bias the main valve spool 2 towards the middle main valve spool position. The biasing assembly includes a supporting shaft 13 (for example a hook) (such as shown in FIGS. 1 and 17). One end of the supporting shaft 13 is connected to an end of the main valve spool body 2B of the main valve spool 2. For example, the one end of the supporting shaft 13 is connected to the end of the main valve spool body 2B of the main valve spool 2 by inserting the one end of the supporting shaft 13 in the connection hole of the main valve spool body 2B. The biasing assembly further includes: a first main valve spool spring seat and a second main valve spool spring seat. Each of the first main valve spool spring seat and the second main valve spool spring seat includes a sleeve, and a flange disposed at an end of the sleeve. The biasing assembly further includes a main valve spool spring 11. The first main valve spool spring seat and the second main valve spool spring seat are fitted over the supporting shaft 13 to be slidable with respect to the supporting shaft 13. The sleeves of the first main valve spool spring seat and the second main valve spool spring seat are inserted into the main valve spool spring 11 from two ends of the main valve spool spring 11, respectively, such that the flanges of the first main valve spool spring seat and the second main valve spool spring seat abut against the two ends of the main valve spool spring 11, respectively. The other end of the supporting shaft 13 has a shoulder. An inner diameter of each of the flanges of the first main valve spool spring seat and the second main valve spool spring seat is less than an outer diameter of the main valve spool body 2B, and an outer diameter of each of the flanges of the first main valve spool spring scat and the second main valve spool spring scat is greater than a diameter of the main valve bore 1C of the valve casing body 1B of the valve casing 1. Thereby, the first main valve spool spring seat and the second main valve spool spring seat are constrained between the shoulder of the supporting shaft 13 and an end surface of the valve casing body 1B of the valve casing 1. The second main valve spool spring seat adjacent to the shoulder of the supporting shaft 13 is fixed in the axial direction.

As shown in FIGS. 1-24, especially as shown in FIGS. 1 and 17, according to an embodiment of the present invention, the main valve spool 2 further includes: a first working port return throttling groove 14 formed in the main valve spool body 2B and configured to control a magnitude of a flow rate of a fluid flowing from the first working port 30 to the first return port 29; an inlet passage 17 configured for the second working port 34 and serving as an inlet of the counterbalance valve; a second working port inlet throttling groove 18 configured to control a magnitude of a flow rate of a fluid flowing from the second supply port 33 to the second working port 34; and a first working port inlet throttling groove 19 configured to control a magnitude of a flow rate of a fluid flowing from the first supply port 31 to the first working port 30. An annular groove is formed on an outer periphery of the main valve spool body 2B, the first working port return throttling groove 14 is in communication with the annular groove on one side of the annular groove, and the first working port inlet throttling groove 19 is in communication with the annular groove on the other side of the annular groove.

As shown in FIGS. 1-8, according to an embodiment of the present invention, in the state where the main valve spool 2 is in the middle main valve spool position, the first main valve spool internal cavity 2C1 and the counterbalance valve spring cavity 20 are in communication with the first return port 29 and the second return port 36, respectively. Specifically, as shown in FIG. 2, in the state where the main valve spool 2 is in the middle main valve spool position, the first working port pressure acquisition hole 21 communicates the first return port 29 with the first main valve spool internal cavity 2C1 of the main valve spool 2. In the state where the main valve spool 2 is in the middle main valve spool position, as shown in FIG.1, the second working port pressure acquisition hole 8 communicates the counterbalance valve spring cavity 20 with the second return port 36. For example, in the state where the main valve spool 2 in the main valve bore 1C is in the middle main valve spool position, the counterbalance valve spring cavity 20 is in communication with the second return port 36 through the gap between the counterbalance valve spring seat 4 and the inner wall of the counterbalance valve spring cavity 20 of the main valve spool 2, and the second working port pressure acquisition hole 8. In the embodiment shown in the figures, especially as shown in FIG.1, in the state where the main valve spool 2 in the main valve bore 1C is in the middle main valve spool position, the counterbalance valve spring cavity 20 is in communication with the second return port 36 through the gap between the counterbalance valve spring seat 4 and the inner wall of the counterbalance valve spring cavity 20 of the main valve spool 2, the counterbalance valve spring seat recess 25, and the second working port pressure acquisition hole 8.

As shown in FIGS. 1-8, especially as shown in FIGS. 1, 2 and 3, according to an embodiment of the present invention, in the state where the main valve spool 2 in the main valve bore 1C is in the middle main valve spool position, the first working port pressure feedback hole 26 communicates the first main valve spool internal cavity 2C1 with the working port pressure detection cavity 32, and the first working port pressure acquisition hole 21 is in communication with the first return port 29, so that the working port pressure detection cavity 32 is in communication with the first return port 29 through the first working port pressure feedback hole 26, the first main valve spool internal cavity 2C1 and the first working port pressure acquisition hole 21.

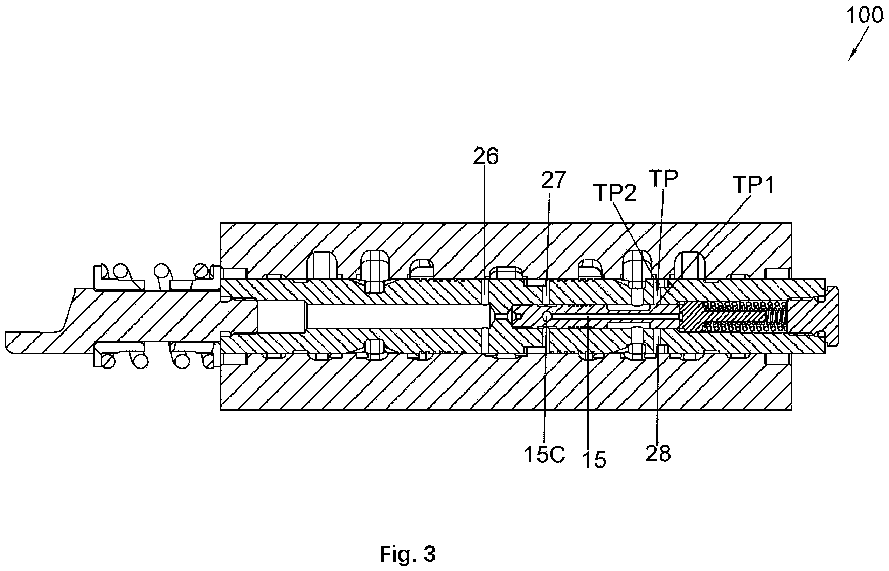

As shown in FIGS. 1-8, especially as shown in FIG. 3, according to an embodiment of the present invention, the main valve spool 2 further includes a second working port pressure feedback hole 27 which passes through the main valve spool wall 2W of the main valve spool 2 in a direction crossing the axial direction. As shown in FIG. 3, the counterbalance valve spool 3 further includes: a counterbalance valve spool axial hole 15 which is formed in the counterbalance valve spool body 3B substantially in the axial direction; and a counterbalance valve spool communication hole 15C which is formed in the counterbalance valve spool body 3B in a direction crossing the axial direction and which is in communication with the counterbalance valve spool axial hole 15. The counterbalance valve spool communication hole 15C may be in communication with the second working port pressure feedback hole 27 through a second counterbalance valve spool recess 22 formed on the outer periphery of the counterbalance valve spool body 3B. The counterbalance valve spring scat 4 further includes: a counterbalance valve spring seat groove 16 (as shown in FIG.1) formed at an end surface of the end 4E and extending in a direction crossing the axial direction. In the state where the main valve spool 2 in the main valve bore 1C is in the middle main valve spool position, the second working port pressure feedback hole 27 communicates the counterbalance valve spool axial hole 15 with the working port pressure detection cavity 32 through the counterbalance valve spool communication hole 15C, and the second working port pressure acquisition hole 8 communicates the counterbalance valve spool axial hole 15 with the second return port 36 through the counterbalance valve spring seat groove 16, so that the working port pressure detection cavity 32 is in communication with the second return port 36 through the second working port pressure feedback hole 27, the counterbalance valve spool communication hole 15C, the counterbalance valve spool axial hole 15, the counterbalance valve spring seat groove 16 and the second working port pressure acquisition hole 8, as shown in FIGS. 1 and 3. The second working port pressure feedback hole 27 may be configured to feed back a pressure acquired by the second working port pressure acquisition hole 8 to the working port pressure detection cavity 32. For example, the counterbalance valve spring seat groove 16 may extend on the end surface of the end 4E such that an end of the counterbalance valve spring seat groove 16 extends to an edge of the end surface of the end 4E, so that the counterbalance valve spring seat groove 16 is in communication with the counterbalance valve spring scat recess 25. The counterbalance valve spring scat groove 16 is in communication with the counterbalance valve spool axial hole 15. The end 4E of the counterbalance valve spring seat 4 abuts against the second end 3E2 of the counterbalance valve spool 3. A sealing contact may be formed between the end surface of the end 4E of the counterbalance valve spring seat 4 and an end surface of the second end 3E2 of the counterbalance valve spool 3. The second working port pressure feedback hole 27 may extend substantially in the radial direction of the main valve spool body 2B, as shown in FIG. 3.

As shown in FIGS. 1-8, according to an embodiment of the present invention, the counterbalance valve spring seat groove 16 communicates the counterbalance valve spool axial hole 15 with the counterbalance valve spring seat recess 25 formed in the outer periphery of the end 4E of the counterbalance valve spring seat 4. As shown in FIGS. 1 and 3, in the state where the main valve spool 2 in the main valve bore 1C is in the middle main valve spool position, the second working port pressure feedback hole 27 communicates the counterbalance valve spool axial hole 15 with the working port pressure detection cavity 32 through the counterbalance valve spool communication hole 15C, and the second working port pressure acquisition hole 8 communicates the counterbalance valve spool axial hole 15 with the second return port 36 through the counterbalance valve spring seat recess 25 and the counterbalance valve spring seat groove 16, so that the working port pressure detection cavity 32 is in communication with the second return port 36 through the second working port pressure feedback hole 27, the counterbalance valve spool communication hole 15C, the counterbalance valve spool axial hole 15, the counterbalance valve spring seat groove 16, the counterbalance valve spring seat recess 25 and the second working port pressure acquisition hole 8. The counterbalance valve spring seat recess 25 may be configured to feed back a load sensing (LS) pressure.

As shown in FIGS. 1-8, especially as shown in FIGS. 1 and 3, according to an embodiment of the present invention, the counterbalance valve spool 3 further includes: the second counterbalance valve spool recess 22 formed on the outer periphery of the counterbalance valve spool body 3B. The counterbalance valve spool communication hole 15C communicates the second counterbalance valve spool recess 22 with the counterbalance valve spool axial hole 15. In the state where the main valve spool 2 in the main valve bore 1C is in the middle main valve spool position, the second working port pressure feedback hole 27 is in communication with the counterbalance valve spool communication hole 15C through the second counterbalance valve spool recess 22. The second counterbalance valve spool recess 22 may be configured to feed back a load sensing (LS) pressure. The second counterbalance valve spool recess 22 may be an annular recess surrounding the outer periphery of the counterbalance valve spool body 3B, or a recess extending along a portion, in the peripheral or circumferential direction, of the outer periphery of the counterbalance valve spool body 3B. A chamber is formed by the second counterbalance valve spool recess 22 and the inner wall of the second main spool internal cavity 2C2 of the main valve spool body 2B. An outer peripheral surface of the counterbalance valve spool body 3B is in sealing contact with a surface of the inner wall of the second main spool internal cavity 2C2.

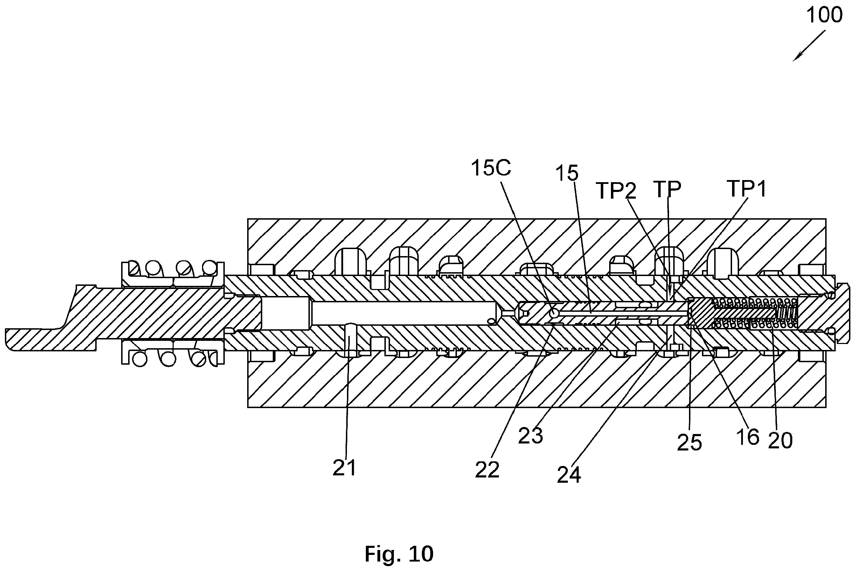

According to an embodiment of the present invention, referring to FIGS. 9-16, in the state where the main valve spool 2 is in the second main valve spool position, the first main valve spool internal cavity 2C1 is in communication with the first return port 29. For example, as shown in FIG. 10, in the state where the main valve spool 2 is in the second main valve spool position, the first working port pressure acquisition hole 21 communicates the first return port 29 with the first main valve spool internal cavity 2C1 of the main valve spool 2. According to an embodiment of the present invention, referring to FIGS. 9-16, especially as shown in FIG. 9, in the state where the main valve spool 2 is in the second main valve spool position, the second working port pressure acquisition hole 8 communicates the counterbalance valve spring cavity 20 with the second working port 34. For example, as shown in FIG. 9, in the state where the main valve spool 2 in the main valve bore 1C is in the second main valve spool position, the counterbalance valve spring cavity 20 is in communication with the second working port 34 through the gap between the counterbalance valve spring seat 4 and the inner wall of the counterbalance valve spring cavity 20 of the main valve spool 2, and the second working port pressure acquisition hole 8. In the example shown in FIGS. 9-16, especially as shown in FIG. 9, in the state where the main valve spool 2 in the main valve bore 1C is in the second main valve spool position, the counterbalance valve spring cavity 20 is in communication with the second working port 34 through the gap between the counterbalance valve spring seat 4 and the inner wall of the counterbalance valve spring cavity 20 of the main valve spool 2, the counterbalance valve spring seat recess 25, and the second working port pressure acquisition hole 8.

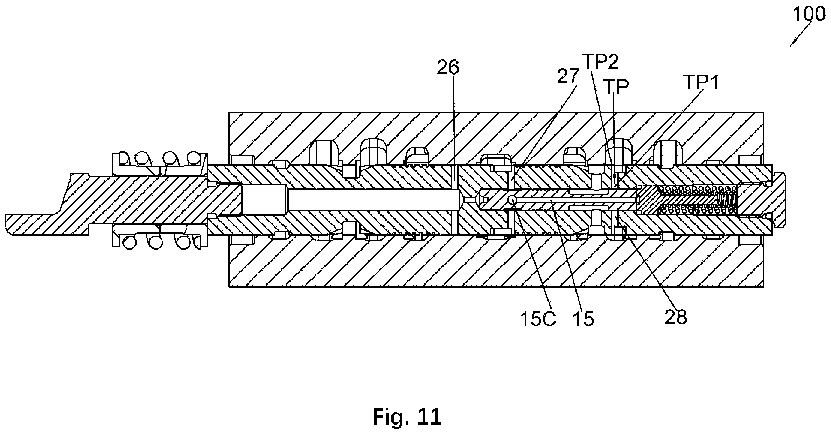

According to an embodiment of the present invention, referring to FIGS. 9-16, in the state where the main valve spool 2 in the main valve bore 1C is in the second main valve spool position, as shown in FIG. 11, the second working port pressure feedback hole 27 communicates the counterbalance valve spool axial hole 15 with the working port pressure detection cavity 32 through the counterbalance valve spool communication hole 15C, and as shown in FIG. 9, the second working port pressure acquisition hole 8 communicates the counterbalance valve spool axial hole 15 with the second working port 34 through the counterbalance valve spring seat groove 16, so that the working port pressure detection cavity 32 is in communication with the second working port 34 through the second working port pressure feedback hole 27, the counterbalance valve spool communication hole 15C, the counterbalance valve spool axial hole 15, the counterbalance valve spring seat groove 16 and the second working port pressure acquisition hole 8.

In the example shown in FIGS. 9-16, in the state where the main valve spool 2 in the main valve bore 1C is in the second main valve spool position, as shown in FIG. 11, the second working port pressure feedback hole 27 communicates the counterbalance valve spool axial hole 15 with the working port pressure detection cavity 32 through the counterbalance valve spool communication hole 15C, and as shown in FIG. 9, the second working port pressure acquisition hole 8 communicates the counterbalance valve spool axial hole 15 with the second working port 34 through the counterbalance valve spring seat recess 25 and the counterbalance valve spring seat groove 16, so that the working port pressure detection cavity 32 is in communication with the second working port 34 through the second working port pressure feedback hole 27, the counterbalance valve spool communication hole 15C, the counterbalance valve spool axial hole 15, the counterbalance valve spring seat groove 16, the counterbalance valve spring seat recess 25 and the second working port pressure acquisition hole 8.

According to an embodiment of the present invention, referring to FIGS. 9-16, especially as shown in FIGS. 9 and 11, in the state where the main valve spool 2 in the main valve bore 1C is in the second main valve spool position, the second working port pressure feedback hole 27 may be in communication with the counterbalance valve spool communication hole 15C through the second counterbalance valve spool recess 22.

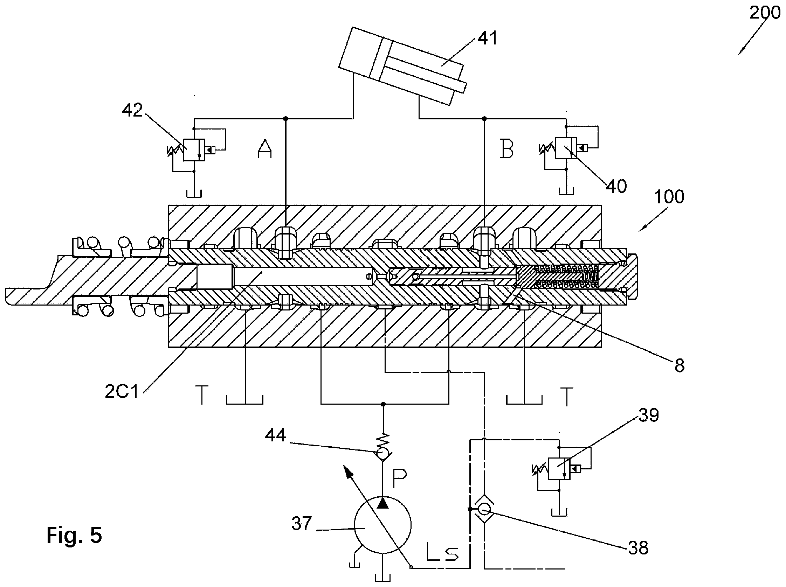

Embodiments of the present invention further provide a hydraulic system 200 including the valve 100. Referring to FIGS. 5-8,13-16 and 21-24, the hydraulic system 200 further includes: a hydraulic cylinder 41 which has chambers located on both sides of a piston of the hydraulic cylinder 41 and respectively connected with the first working port 30 and the second working port 34 (it can be understood that herein the hydraulic cylinder is merely an example of an actuator and any other actuator such as a motor may be used in the hydraulic system); a first working port overflow valve 42 connected with the first working port 30; a second working port overflow valve 40 connected with the second working port 34; a pump 37, such as a load sensing variable displacement pump, connected with the first supply port 31 and the second supply port 33 through a check valve 44; a shuttle valve 38 through which the working port pressure detection cavity 32 feeds back the pressure to a feedback port of the pump 37; and a pressure detection overflow valve (load sensing (LS) overflow valve) 39 connected with the feedback port of the pump 37.

An operational principle of the valve 100 and an operational principle of the hydraulic system 200 in the state where the main valve spool 2 is in the middle main valve spool position is described as below with reference to FIGS. 1-8.

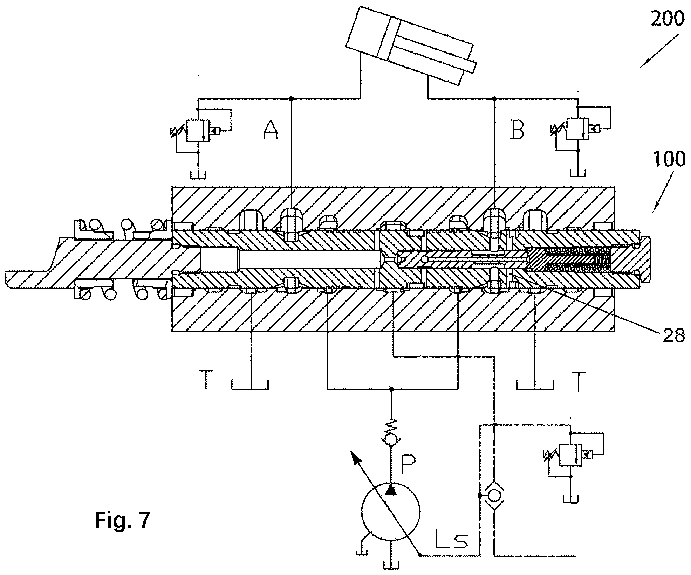

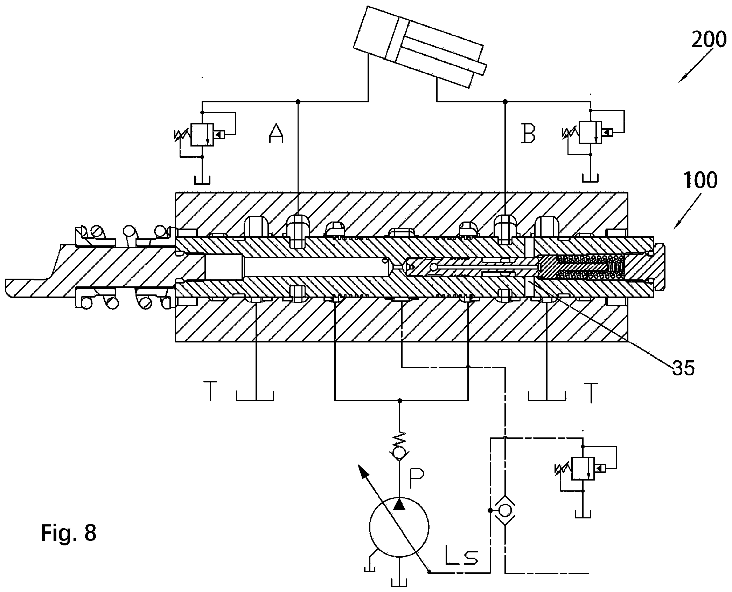

Referring to FIGS. 1-8, in the state where the main valve spool 2 is in the middle main valve spool position, the first supply port 31 and the second supply port 33 are disconnected from the first working port 30 and the second working port 34, respectively. In this case, as shown in FIG. 5, on one side of the counterbalance valve spool 3, a pressure of the working port pressure detection cavity 32 is released to the second return port 36 sequentially through the second working port pressure feedback hole 27, the second counterbalance valve spool recess 22, the counterbalance valve spool axial hole 15, the counterbalance valve spring seat groove 16, the counterbalance valve spring seat recess 25 and the second working port pressure acquisition hole 8, thereby achieving a relief of the pressure of the working port pressure detection cavity 32. As shown in FIG. 5,on the other side of the counterbalance valve spool 3, the pressure of the working port pressure detection cavity 32 is released sequentially through the first working port pressure feedback hole 26, the first main valve spool internal cavity 2C1, and the first working port pressure acquisition hole 21, thereby achieving a relief of the pressure of the working port pressure detection cavity 32. Therefore, when the main valve spool 2 is in the middle main valve spool position, the pressure of the working port pressure detection cavity 32 is released to the first return port 29 and the second return port 36 on both sides of the working port pressure detection cavity 32. In this case, an operating state of the counterbalance valve is as follows.
(1) A pressure of the counterbalance valve spring cavity 20 is released to the second return port 36 sequentially through a fit clearance between the counterbalance valve spring seat 4 and the inner wall of the counterbalance valve spring cavity 20 of the main valve spool 2, the counterbalance valve spring seat recess 25, and the second working port pressure acquisition hole 8.
(2) In this case, the pressure of the first main valve spool internal cavity 2C1 is generally equal to a pressure of the first return port 29, so that the pressure of the first main valve spool internal cavity 2C1 cannot overcome a total spring force of the two springs 5 and 6 of the counterbalance valve. Therefore, in this case, the counterbalance valve spool 3 is in a stationary state in the first counterbalance valve spool position.
(3) The outlet TP2 of the sub-outlet passage 24 is in communication with the second return port 36, and the inlet TP1 of the sub-outlet passage 24 is closed by the counterbalance valve spool 3, as shown in FIG. 6.
(4) The outlet TP2 of the sub-outlet passage 28 is closed by the valve casing 1, and the inlet TP1 of the sub-outlet passage 28 is closed by the counterbalance valve spool 3, as shown in FIG. 7.
(5) The outlet TP2 of the sub-outlet passage 35 is in communication with the second return port 36, and the inlet TP1 of the sub-outlet passage 28 is closed by the counterbalance valve spool 3, as shown in FIG. 8.
(6) Therefore, when the main valve spool 2 is in the middle main valve spool position, all of the inlets TP1 of the sub-outlet passages 24, 28 and 35 are closed by the counterbalance valve spool 3, a fluid from the second working port 34 cannot flow to the second return port 36, and thus a load is retained.

The operational principle of the valve 100 and the operational principle of the hydraulic system 200 in the state where the main valve spool 2 is in the second main valve spool position is described as below with reference to FIGS. 9-16.

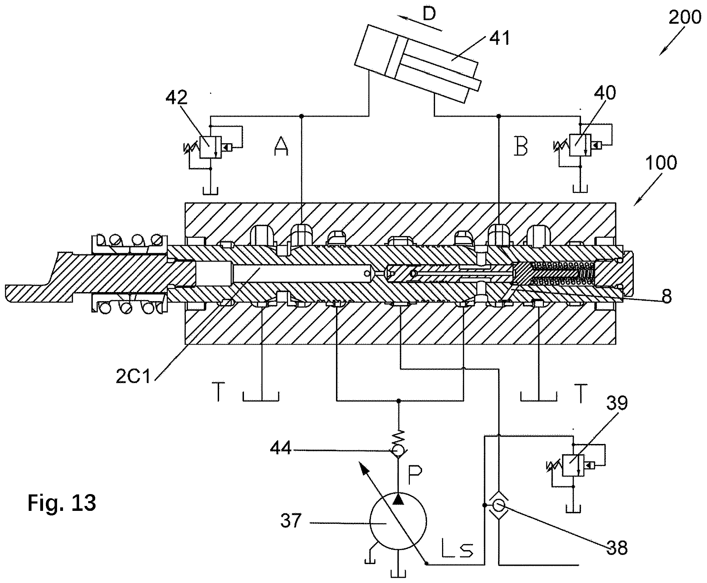

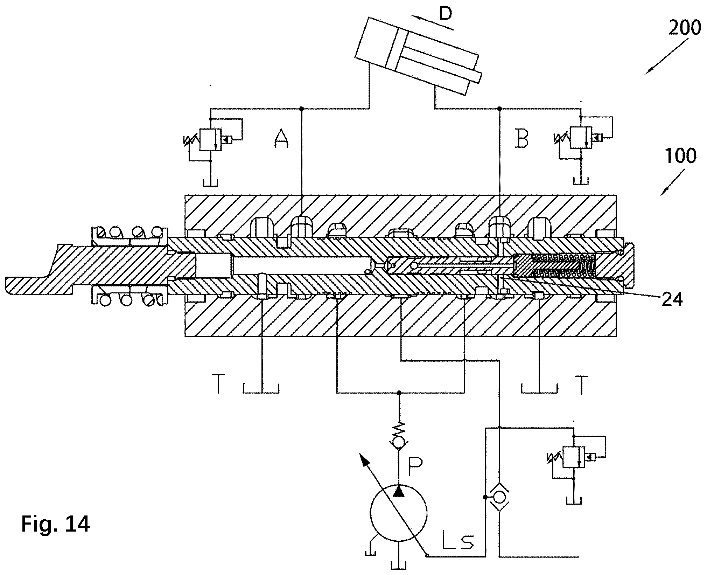

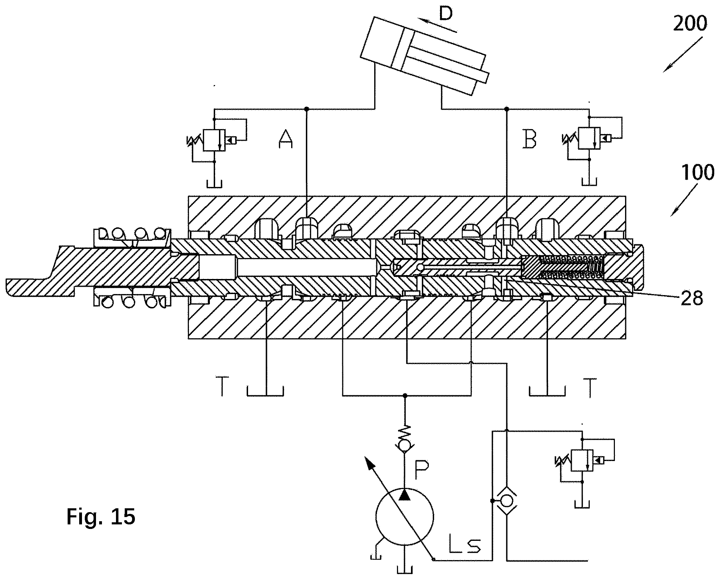

Referring to FIGS. 9-16, when the main valve spool 2 is in the second main valve spool position, the fluid flows from the second supply port 33 to the second working port 34 (port B). A magnitude of a flow rate of the fluid is adjustable by the second working port inlet throttling groove 18, and a direction of motion D of the piston of the hydraulic cylinder 41 is as shown in FIGS. 13-16. In this case, the second working port pressure acquisition hole 8 is in communication with the second working port 34 as shown in FIG. 13, so that a pressure of the second working port 34 is fed back to the working port pressure detection cavity 32 sequentially through the second working port pressure acquisition hole 8, the counterbalance valve spring scat recess 25, the counterbalance valve spring seat groove 16, the counterbalance valve spool axial hole 15, the counterbalance valve spool communication hole 15C, the second counterbalance valve spool recess 22, and the second working port pressure feedback hole 27, and is fed back to the pump 37 through the shuttle valve 38, thereby achieving a load sensing control. On the other hand, as shown in FIG. 15, the first working port pressure feedback hole 26 is disconnected from the working port pressure detection cavity 32, and as shown in FIG. 14, the first main valve spool internal cavity 2C1 is in communication with the first return port 29 through the first working port pressure acquisition hole 21 so that a pressure of the first main valve spool internal cavity 2C1 is released. In this case, the operating state of the counterbalance valve is as follows.
(1) All of the outlets TP2 of the sub-outlet passage 24, the sub-outlet passage 28, and the sub-outlet passage 35 are in communication with the second working port 34. However, all of the inlets TP1 of the sub-outlet passages 24, 28 and 35 are closed by the counterbalance valve spool 3, as shown in FIGS. 14, 15 and 16.
(2) A load pressure of the second working port 34 is introduced to the counterbalance valve spring cavity 20 through the second working port pressure acquisition hole 8, and the fit clearance between the counterbalance valve spring seat 4 and the inner wall of the counterbalance valve spring cavity 20 of the main valve spool 2, as shown in FIG. 13. Therefore, in this case, a pressure of the counterbalance valve spring cavity 20 is equal to a pressure of the second working port 34.
(3) Since the pressure of the first main valve spool internal cavity 2C1 is generally equal to the pressure of the first return port 29, and the pressure of the counterbalance valve spring cavity 20 is equal to the pressure of the second working port 34, the counterbalance valve spool 3 is pressed in the main valve spool 2 and is in the stationary state in the first counterbalance valve spool position.

The operational principle of the valve 100 and the operational principle of the hydraulic system 200 in the state where the main valve spool 2 is in the first main valve spool position is described as below with rcfcrcncc to FIGS. 17-24.

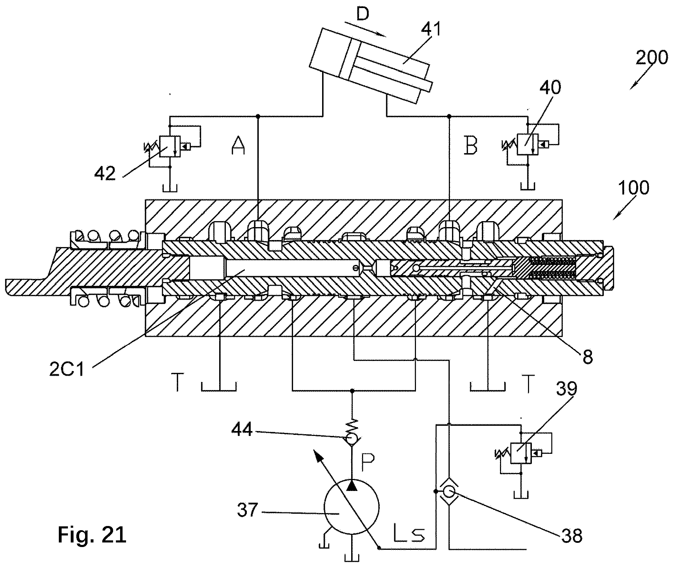

Referring to FIGS. 17-24, when the main valve spool 2 is in the first main valve spool position, the hydraulic fluid flows from the first supply port 31 to the first working port 30 (port A), as shown in FIG. 17. A magnitude of a flow rate of the hydraulic fluid is adjustable by the first working port inlet throttling groove 19, and the direction of motion D of the piston of the hydraulic cylinder 41 is as shown in FIGS. 21-24. In this case, as shown in FIG. 18, a pressure of the first working port 30 is fed back to the working port pressure detection cavity 32 through the first working port pressure acquisition hole 21, the first main valve spool internal cavity 2C1, and the first working port pressure feedback hole 26, thereby achieving the load sensing control. The second working port pressure feedback hole 27 is disconnected from the working port pressure detection cavity 32, as shown in FIG. 19. In this case, the operating state of the counterbalance valve is as follows.
(1) The pressure of the counterbalance valve spring cavity 20 is released to the second return port 36 through the fit clearance between the counterbalance valve spring seat 4 and the inner wall of the counterbalance valve spring cavity 20 of the main valve spool 2, the counterbalance valve spring seat recess 25, and the second working port pressure acquisition hole 8, as shown in FIG. 17. Therefore, in this case, the pressure of the counterbalance valve spring cavity 20 is equal to a pressure of the second return port 36.
(2) The pressure of the first main valve spool internal cavity 2C1 is equal to the pressure of the first working port 30, and enters the second main valve spool internal cavity 2C2 through the main valve spool internal cavity partition wall through hole 9 such as the damping hole, as shown in FIG. 18, thereby opening the counterbalance valve against the total force of the counterbalance valve springs 5 and 6. In other words, the counterbalance valve spool 3 is moved to the second counterbalance valve spool position.
(3) During the movement of the counterbalance valve spool 3 to the second counterbalance valve spool position, a total flow area of the sub-throttling passages as the sub-outlet passages 24, 28 and 35 gradually increases. The hydraulic fluid from the second working port 34 flows from the sub-outlet passages 24, 28 and 35 to the second return port 36 through the inlet passage 17 configured for the second working port 34, and the first counterbalance valve spool recess 23, thereby achieving actions, such as lowering the negative load and forward tilting the negative load.
(4) The flow rate has a continuity. A ratio of a magnitude of a flow rate of the first working port 30 to an area of the piston of the hydraulic cylinder is in proportion to a ratio of a magnitude of a flow rate of the second working port 34 to the area of the piston of the hydraulic cylinder. Therefore, the flow rate is continuous. A magnitude of a flow rate of the hydraulic fluid passing through the counterbalance valve may be completely controlled by the first working port inlet throttling groove 19, thereby avoiding problems such as a stall or an uncontrollable flow rate caused by the negative load. In addition, a total area of the sub-outlet passages 24, 28 and 35 changes gradually, thereby achieving a soft start of a load and improving control performance.

With the valve according to the embodiments of the present invention, a counterbalance valve is integrated in a spool of a load sensing multiple valve. Thereby, a function of the counterbalance valve is achieved. In addition, a load sensing (LS) pressure is fed back to the working port pressure detection cavity 32 through the fit clearance between the counterbalance valve spring seat 4 and the inner wall of the counterbalance valve spring cavity 20 of the main valve spool 2, and the fit clearance between the counterbalance valve spool 3 and the inner wall of the counterbalance valve spring cavity 20 of the main valve spool 2, thereby achieving both a load sensing function and the function of the counterbalance valve. Furthermore, an integrity level is greatly improved. Further, a required controlling pressure is successfully achieved in a narrow space by the two springs and the first end 3E1 of the counterbalance valve spool 3 having a shape of a truncated cone.

The valve according to the embodiments of the present invention may be applied to cranes, forklifts, and the like.

With the valve according to the embodiments of the present invention, the counterbalance valve is configured to control actions of a negative load of a hydraulic cylinder or a motor, such as lowering the negative load and forward tilting the negative load, so that a velocity of movement of the hydraulic cylinder or the motor is controllable, and a stable movement is achieved. Structurally, the counterbalance valve is disposed in the main valve spool. Thereby, a structure of the valve is more compact while ensuring working performance, so that the valve is more suitable for a narrow mounting space.

## Claims

1. A valve (100) comprising:
a valve casing (1) comprising: a valve casing body (1B), a main valve bore (1C) extending in an axial direction in the valve casing body (1B); and a first working port (30), a second working port (34), a supply port (S) comprising a first supply port (31) and a second supply port (33) and a return port (R) comprising a first return port (29) and a second return port (36) formed in the valve casing body (1B);
a main valve spool (2) which is disposed in the main valve bore (1C) of the valve casing (1B) and which is slidable in the main valve bore (1C) to change the communication status between each of the first and second working ports (30, 34) and each of the supply and return ports (S, R), the main valve spool (2) being slidable among a first main valve spool position, a middle main valve spool position and a second main valve spool position to control the communication status between the first working port (30) and each of the first supply port (31) and first return port (33), and the communication status between the second working port (34) and each of the second supply port (33) and second return port (36);the main valve spool (2) comprising:
a main valve spool body (2B), a main valve spool internal cavity (2C) extending in the axial direction in the main valve spool body (2B);
a main valve spool wall (2W) surrounding the main valve spool internal cavity (2C);
an inlet passage (17) which passes through the main valve spool wall (2W) in a direction crossing the axial direction and which is configured for the second working port (34); and
an outlet passage (TP) which passes through the main valve spool wall (2W) in a direction crossing the axial direction, and which has an inlet (TP1) towards the main valve spool internal cavity (2C) and an outlet (TP2) towards the valve casing body (1B); and
a counterbalance valve spool (3) which is disposed in the main valve spool internal cavity (2C) of the main valve spool (2) and which is slidable relative to the main valve spool (2) between a first counterbalance valve spool position and a second counterbalance valve spool position, the counterbalance valve spool (3) comprising:
a counterbalance valve spool body (3B); and
a first counterbalance valve spool recess (23) formed on an outer periphery of the counterbalance valve spool body (3B),
wherein in a state where the counterbalance valve spool (3) is in the first counterbalance valve spool position, the inlet (TP1) of the outlet passage (TP) of the main valve spool (3) is closed by the counterbalance valve spool (3); and
in a state where the counterbalance valve spool (3) is in the second counterbalance valve spool position, the inlet (TP1) of the outlet passage (TP) of the main valve spool (2) is opened by the counterbalance valve spool (3) through the first counterbalance valve spool recess (23) of the counterbalance valve spool (3), so that the second working port (34) is in communication with the return port (R) through the inlet passage (17) configured for the second working port (34), the first counterbalance valve spool recess (23) and the outlet passage (TP), wherein in a state where the main valve spool is (2) in the first main valve spool position, the first working port (30) is in communication with the first supply port (31), the counterbalance valve spool (3) is in the second counterbalance valve spool position, and the second working port (34) is in communication with the second return port (36) through the inlet passage (17) configured for the second working port (34), the first counterbalance valve spool recess (23) and the outlet passage (TP);
in a state where the main valve spool (2) is in the middle main valve spool position, the counterbalance valve spool (3) is in the first counterbalance valve spool position, and the first working port (30) and the second working port (34) are disconnected from the first supply port (31) and the second supply port (33), respectively; and
in a state where the main valve spool (2) is in the second main valve spool position, the counterbalance valve spool (3) is in the first counterbalance valve spool position, the first working port (30) is in communication with the first return port (29), and the second working port (34) is in communication with the second supply port (33), and **characterized in that** the valve casing (1) further comprises a working port pressure detection cavity (32) formed in the valve casing body (1B) and opening to the main valve bore (1C), and a first feedback passage and a second feedback passage are formed in the main valve spool (2), wherein:
when the main valve spool (2) is in the middle main valve spool position, each of the first feedback passage and the second feedback passage communicates the working port pressure detection cavity (32) with the return port (R);
when the main valve spool (2) is in the first main valve spool position, the first feedback passage communicates the working port pressure detection cavity (32) with the first working port (30) and the second feedback passage is disconnected from the working port pressure detection cavity (32);
when the main valve spool (2) is in the second main valve spool position, the second feedback passage communicates the working port pressure detection cavity (32) with the second working port (34) and the first feedback passage is disconnected from the working port pressure detection cavity (32).

2. The valve of claim 1, wherein:
the outlet passage comprises a plurality of sub-outlet passages arranged in the axial direction, such that the greater a distance which the counterbalance valve spool slides in a direction from the first counterbalance valve spool position towards the second counterbalance valve spool position is, the more sub-outlet passages are opened.

3. The valve of claim 1, wherein:
the main valve spool internal cavity (2C) of the main valve spool (2) comprises: first and second main valve spool internal cavities (2C1, 2C2) extending in the axial direction in the main valve spool body (2B); a main valve spool internal cavity partition wall (2P) between the first and second main valve spool internal cavities (2C1, 2C2); a main valve spool internal cavity partition wall through hole (9) formed in the main valve spool internal cavity partition wall (2P) and communicating the first main valve spool internal cavity (2C1) with the second main valve spool internal cavity (2C2); and a counterbalance valve spring cavity (20) extending from the second main valve spool internal cavity (2C2) in a direction away from the first main valve spool internal cavity (2C1);
the counterbalance valve spool (3) is disposed in the second main valve spool internal cavity (2C2) of the main valve spool (2), and has a first end (3E1) adjacent to the main valve spool internal cavity partition wall (2P) of the main valve spool (2), and a second end (3E2) opposite to the first end (3E1);
the valve (1) further comprises:
a counterbalance valve spring seat (4) disposed in the counterbalance valve spring cavity (20) of the main valve spool (2) and having an end (4E) facing towards the counterbalance valve spool (3); and
a counterbalance valve (5, 6) spring disposed in the counterbalance valve spring cavity (20) of the main valve spool (2) and configured to apply a force to the counterbalance valve spring seat (4) to bias the counterbalance valve spring seat (4) towards the counterbalance valve spool (3), so that the end of the counterbalance valve spring seat (4) abuts against the second end (3E2) of the counterbalance valve spool and applies a pushing force to the counterbalance valve spool (3) in a direction from the second counterbalance valve spool position towards the first counterbalance valve spool position.

4. The valve of claim 3, wherein:
the counterbalance valve spring seat (4) comprises: a head (4H) having the end facing towards the counterbalance valve spool (3); and a rod (4S) inserted into the counterbalance valve spring (5, 6), and
the main valve spool (2) further comprises a plug (7) which closes an end of the main valve spool internal cavity (2C) of the main valve spool (2), and which is configured to restrict, by an abutment against the rod (4S) of the counterbalance valve spring seat (4), a distance which the counterbalance valve spring seat (4) slides, and thus a distance which the counterbalance valve spool (3) slides in a direction from the first counterbalance valve spool position towards the second counterbalance valve spool position.

5. The valve of claim 3, wherein:
the first feedback passage comprises a first working port pressure acquisition hole (21) which passes through the main valve spool wall (2W) of the main valve spool (2)in a direction crossing the axial direction and which opens to the first main valve spool internal cavity (2C1), in the state where the main valve spool (2) in the main valve bore (1C) is in the first main valve spool position, the first working port pressure acquisition hole (21) is in communication with the first working port (30) so that the first working port (30) is in communication with the first main valve spool internal cavity (2C1) of the main valve spool (2) through the first working port pressure acquisition hole (21).

6. The valve of claim 5, wherein:
the first feedback passage further comprises a first working port pressure feedback hole (26) which passes through the main valve spool wall (2W) of the main valve spool (2) in a direction crossing the axial direction and which opens to the first main valve spool internal cavity (2C1), in the state where the main valve spool (2) in the main valve bore is in the first main valve spool position, the first working port pressure feedback hole (26) is in communication with the working port pressure detection cavity (32) so that the working port pressure detection cavity (32) is in communication with the first working port through the first working port (30) pressure feedback hole (26), the first main valve spool internal cavity (2C1) and the first working port pressure acquisition hole (21).

7. The valve of claim 5, wherein:
the main valve spool internal cavity partition wall through hole (9) is a damping hole, in the state where the main valve spool (2) in the main valve bore (1C) is in the first main valve spool position, an opening force applied to the counterbalance valve spool (3) through the damping hole by a pressure in the first main valve spool internal cavity (2C1) is greater than a force applied to the counterbalance valve spool (3) by the counterbalance valve spring (5, 6), such that the counterbalance valve spool (3) is forced to move from the first counterbalance valve spool position towards the second counterbalance valve spool position.

8. The valve of claim 6, wherein:
in the state where the main valve spool (2) in the main valve bore (1C) is in the middle main valve spool position, the first working port pressure feedback hole (26) is in communication with the working port pressure detection cavity (32), and the first working port pressure acquisition hole (21) is in communication with the first return port (R), so that the working port pressure detection cavity (32) is in communication with the first return port (R) through the first working port pressure feedback hole (26), the first main valve spool internal cavity (2C1) and the first working port pressure acquisition hole (21);
in the state where the main valve spool (2) is in the second main valve spool position, the first working port pressure feedback hole (26) is closed by the valve casing body (1B) so that the first working port pressure feedback hole (26) is disconnected from the working port pressure detection cavity (32), and the first main valve spool internal cavity (2C1) is in communication with the first return port (R) through the first working port pressure acquisition hole (21).

9. The valve of claim 5, wherein:
the second feedback passage comprises a second working port pressure acquisition hole (8) which passes through the main valve spool wall (2W) of the main valve spool (2) in a direction crossing the axial direction and which opens to the counterbalance valve spring cavity (20), there is a gap between the counterbalance valve spool (3) and an inner wall of the counterbalance valve spring cavity (20) of the main valve spool (2), and when the counterbalance valve spool is (3) in each of the first counterbalance valve spool position and the second counterbalance valve spool position, the counterbalance valve spring cavity (20) is in communication with the second working port pressure acquisition hole (8) through the gap.

10. The valve of claim 9, wherein:
a counterbalance valve spring seat recess (25) is formed at an end surface of the end of the counterbalance valve spring seat (4) on an outer periphery of the end of the counterbalance valve spring seat, and the counterbalance valve spring seat recess (25) is in communication with the gap to constitute a part of the counterbalance valve spring cavity (20).

11. The valve of claim 9 or 10, wherein:
the second feedback passage further comprises a second working port pressure feedback hole (27) which passes through the main valve spool wall (2W) of the main valve spool (2) in a direction crossing the axial direction;
the second feedback passage further comprises: a counterbalance valve spool communication hole (15C) formed in the counterbalance valve spool body (3) in a direction crossing the axial direction, and a counterbalance valve spool axial hole (15) which is formed in the counterbalance valve spool body (3B) substantially in the axial direction and which is in communication with the counterbalance valve spool communication hole (15C);
the second feedback passage further comprises a counterbalance valve spring seat groove (16) formed at an end surface of the end of the counterbalance valve spring seat (4), and extending in a direction crossing the axial direction, the counterbalance valve spring seat groove (16) is in communication with both the counterbalance valve spool axial hole (15) and the counterbalance valve spring cavity (20).

12. The valve of claim 11, wherein:
in the state where the main valve spool (2) in the main valve bore (16) is in the middle main valve spool position, the counterbalance valve spool (3) is in the first counterbalance valve spool position, the second working port pressure feedback hole (27) is in communication with both the working port pressure detection cavity (32) and the counterbalance valve spool communication hole (15C), and the second working port pressure acquisition hole (8) is in communication with the second return port (36), so that the working port pressure detection cavity (32) is in communication with the second return port (36) through the second working port pressure feedback hole (27), the counterbalance valve spool communication hole (15C), the counterbalance valve spool axial hole (15), the counterbalance valve spring seat groove (16), the counterbalance valve spring cavity (20) and the second working port pressure acquisition hole (8),
preferably, the counterbalance valve spool (3) further comprises: a second counterbalance valve spool recess (22) formed on the outer periphery of the counterbalance valve spool body (3B), the counterbalance valve spool communication hole (15C) communicates the second counterbalance valve spool recess (22) with the counterbalance valve spool axial hole (15), and in the state where the main valve spool in the main valve bore is in the middle main valve spool position, the second working port pressure feedback hole (27) is in communication with the counterbalance valve spool communication hole (15C) through the second counterbalance valve spool recess (22).

13. The valve of claim 11, wherein:
in the state where the main valve spool (2) in the main valve bore (1C) is in the first main valve spool position, the counterbalance valve spool (3) is in the second counterbalance valve spool position so that the second end (3E2) of the counterbalance valve spool (3) enters the counterbalance valve spring cavity (20), the counterbalance valve spring cavity (20) is in communication with the second return port (36) through a gap between the counterbalance valve spring seat (4) and the inner wall of the counterbalance valve spring cavity (22) of the main valve spool (2), the gap between the counterbalance valve spool (3) and the inner wall of the counterbalance valve spring cavity (20) of the main valve spool (2), and the second working port pressure acquisition hole (8); and
in the state where the main valve spool (2) in the main valve bore (1C) is in the first main valve spool position, the second working port pressure feedback hole (27) is closed by the valve casing body (1B), so that the second working port pressure feedback hole (27) is disconnected from the working port pressure detection cavity (32).

14. The valve of claim 11, wherein:
in the state where the main valve spool (2) in the main valve bore (1C) is in the second main valve spool position, the second working port pressure feedback hole (27) is in communication with both the working port pressure detection cavity (32) and the counterbalance valve spool communication hole (15C), and the second working port pressure acquisition hole (8) is in communication with the second working port (34), so that the working port pressure detection cavity (32) is in communication with the second working port (34) through the second working port pressure feedback hole (27), the counterbalance valve spool communication hole (15C), the counterbalance valve spool axial hole (15), the counterbalance valve spring seat groove (16), the counterbalance valve spring cavity (20) and the second working port pressure acquisition hole (8),
preferably, the counterbalance valve spool (3) further comprises: a second counterbalance valve spool recess (22) formed on the outer periphery of the counterbalance valve spool body (3B), the counterbalance valve spool communication hole (15C) communicates the second counterbalance valve spool recess (22) with the counterbalance valve spool axial hole (15), and in the state where the main valve spool (2) in the main valve bore (1C) is in the second main valve spool position, the second working port pressure feedback hole (27) is in communication with the counterbalance valve spool communication hole (15C) through the second counterbalance valve spool recess (22).

15. A hydraulic system (200) comprising:
the valve (10) of claim 1.

## Patentansprüche

1. Ventil (100), das aufweist:
ein Ventilgehäuse (1), das aufweist: einen Ventilgehäusekörper (1B), eine Hauptventilbohrung (1C), die sich in einer axialen Richtung in dem Ventilgehäusekörper (1B) erstreckt; und einen ersten Arbeitsanschluss (30), einen zweiten Arbeitsanschluss (34), eine Zuführöffnung (S), die einen ersten Zuführanschluss (31) und einen zweiten Zuführanschluss (33) aufweist, und eine Rücklauföffnung (R), die einen ersten Rücklaufanschluss (29) und einen zweiten Rücklaufanschluss (36) aufweist, die in dem Ventilgehäusekörper (1B) ausgebildet sind;
einen Hauptventilschieber (2), der in der Hauptventilbohrung (1C) des Ventilgehäuses (1B) angeordnet ist und der in der Hauptventilbohrung (1C) verschiebbar ist, um den Verbindungsstatus zwischen jedem der ersten und zweiten Arbeitsanschlüsse (30, 34) und jedem der Zuführ- und Rücklauföffnungen (S, R) zu ändern, wobei der Hauptventilschieber (2) verschiebbar ist zwischen einer ersten Hauptventilschieberposition, einer mittleren Hauptventilschieberposition und einer zweiten Hauptventilschieberposition, um den Verbindungsstatus zwischen dem ersten Arbeitsanschluss (30) und jedem der ersten Zuführanschlüsse (31) und dem ersten Rücklaufanschluss (33) und den Verbindungsstatus zwischen dem zweiten Arbeitsanschluss (34) und jedem von dem zweiten Zuführanschluss (33) und den zweiten Rücklaufanschluss (36) zu steuern, wobei der Hauptventilschieber aufweist:
einen Hauptventilschieberkörper (2B), einen inneren Hauptventilschieber-Hohlraum (2C), der sich in axialer Richtung in dem Hauptventilschieberkörper (2B) erstreckt;
eine Hauptventilschieberwand (2B), die den
Hauptventilschieberinnenhohlraum (2C) umgibt;
einen Einlassdurchgang (17), der durch die Hauptventilschieberwand (2B) in eine die axiale Richtung kreuzenden Richtung hindurchgeht und der für den zweiten Arbeitsanschluss (34) konfiguriert ist; und
einen Auslassdurchgang (TP), der durch die Hauptventilschieberwand (2B) in einer die axiale Richtung kreuzenden Richtung hindurchgeht und der einen Einlass (TP1) in Richtung des inneren Hauptventilschieberhohlraums (2C) und einen Auslass (TP2) in Richtung des Ventilgehäusekörpers (1B) aufweist; und
einen Ausgleichsventilschieber (3), der in dem inneren Hauptventilschieber-Hohlraum (2C) des Hauptventilschiebers angeordnet ist und der relativ zu dem Hauptventilschieber (2) zwischen einer ersten Ausgleichsventilschieberposition und einer zweiten Ausgleichsventilschieberposition verschiebbar ist, wobei der Ausgleichsventilschieber (3) aufweist:
einen Ausgleichsventilschieberkörper (3B); und
eine erste Ausgleichsventilschieberaussparung (23), die an einem Außenumfang des Ausgleichsventilschieberkörpers (3B) ausgebildet ist,
wobei in einem Zustand, in dem sich der Ausgleichsventilschieber (3) in der ersten Ausgleichsventilschieberposition befindet, der Einlass (TP1) des Auslassdurchgangs (TP) des Hauptventilschiebers (3) durch den Ausgleichsventilschieber (3) geschlossen ist; und
in einem Zustand, in dem sich der Ausgleichsventilschieber (3) in der zweiten Ausgleichsventilschieberposition befindet, der Einlass (TP1) des Auslassdurchgangs (TP) des Hauptventilschiebers (2) durch den Ausgleichsventilschieber (3) durch die ersten Ausgleichsventilschieberaussparung (23) des Ausgleichsventilschiebers (3) geöffnet wird, so dass der zweite Arbeitsanschluss (34) durch den für den zweiten Arbeitsanschluss (34) konfigurierten Einlassdurchgang (17), die erste Ausgleichsventilschieberaussparung (23) und den Auslassdurchgang (TP) in Verbindung mit der Rücklauföffnung (R) steht, wobei in einem Zustand, in dem sich der Hauptventilschieber (2) in der ersten Hauptventilschieberstellung befindet, der erste Arbeitsanschluss (30) mit dem ersten Versorgungsanschluss (31) in Verbindung steht, der Ausgleichsventilschieber (3) sich in der zweiten Ausgleichsventilschieberstellung befindet und der zweite Arbeitsanschluss (34) über den für den zweiten Arbeitsanschluss (34) konfigurierten Einlassdurchgang (17), die erste Ausgleichsventilschieberaussparung (23) und den Auslassdurchgang (TP) mit dem zweiten Rücklaufanschluss (36) in Verbindung steht;
in einem Zustand, in dem sich der Hauptventilschieber (2) in der mittleren Hauptventilschieberposition befindet, der Ausgleichsventilschieber (3) sich in der ersten Ausgleichsventilschieberposition befindet und der erste Arbeitsanschluss (30) und der zweite Arbeitsanschluss (34) von dem ersten Versorgungsanschluss (31) bzw. dem zweiten Versorgungsanschluss (33) getrennt sind; und
in einem Zustand, in dem sich der Hauptventilschieber (2) in der zweiten Hauptventilschieberposition befindet, sich der Ausgleichsventilschieber (3) in der ersten Ausgleichsventilschieberposition befindet, der erste Arbeitsanschluss (30) in Verbindung mit dem ersten Rücklaufanschluss (29) steht und der zweite Arbeitsanschluss (34) in Verbindung mit dem zweiten Versorgungsanschluss (33) steht, und **dadurch gekennzeichnet, dass** das Ventilgehäuse (1) ferner einen Arbeitsanschlussdruck-Erfassungshohlraum (32) aufweist, der in dem Ventilgehäusekörper (1B) ausgebildet ist und sich zu der Hauptventilbohrung (1C) öffnet, und ein erster Rückkopplungsdurchgang und ein zweiter Rückkopplungsdurchgang in dem Hauptventilschieber (2) ausgebildet sind, wobei:
wenn sich der Hauptventilschieber (2) in der mittleren Hauptventilschieberposition befindet, sowohl der erste Rückkopplungsdurchgang als auch der zweite Rückkopplungsdurchgang den Arbeitsanschlussdruck-Erfassungshohlraum (32) mit der Rücklauföffnung (R) verbindet;
wenn der Hauptventilschieber in der ersten Hauptventilschieberposition ist, der erste Rückkopplungsdurchgang den Arbeitsanschlussdruck-Erfassungshohlraum (32) mit dem ersten Arbeitsanschluss (30) verbindet und der zweite Rückkopplungsdurchgang von dem Arbeitsanschlussdruck-Erfassungshohlraum (32) getrennt ist;
wenn sich der Hauptventilschieber (2) in der zweiten Hauptventilschieberposition befindet, der zweite Rückkopplungsdurchgang den Arbeitsanschlussdruck-Erfassungshohlraum (32) mit dem zweiten Arbeitsanschluss (34) verbindet und der erste Rückkopplungsdurchgang von dem Arbeitsanschlussdruck-Erfassungshohlraum (32) getrennt ist.

2. Ventil nach Anspruch 1, wobei:
der Auslassdurchgang mehrere in axialer Richtung angeordnete Teilauslassdurchgänge aufweist, so dass um so mehr Teilauslassdurchgänge geöffnet werden, je größer ein Abstand ist, den der Ausgleichsventilschieber in einer Richtung von der ersten Ausgleichsventilschieberposition zur zweiten Ausgleichsventilschieberposition gleitet.

3. Ventil nach Anspruch 1, wobei:
der innere Hauptventilschieber-Hohlraum (2C) des Hauptventilschiebers (2) aufweist: einen ersten und einen zweiten inneren Hauptventilschieber-Hohlraum (2C1, 2C2), die sich in axialer Richtung im Hauptventilschieberkörper (2B) erstrecken; eine innere Hauptventilschieber-Hohlraum-Trennwand (2P) zwischen dem ersten und dem zweiten inneren Hauptventilschieber-Hohlraum (2C1, 2C2); eine innere Hauptventilschieber-Hohlraum-Trennwand-Durchgangsöffnung (9), die in der inneren Hauptventilschieber-Hohlraum-Trennwand (2P) ausgebildet ist und den ersten inneren Hauptventilschieber-Hohlraum (2C1) mit dem zweiten inneren Hauptventilschieber-Hohlraum (2C2) verbindet; und einen Ausgleichsventil-Federhohlraum (20), der sich von dem zweiten inneren Hauptventilschieber-Hohlraum (2C2) in eine Richtung weg von dem ersten inneren Hauptventilschieber-Hohlraum (2C1) erstreckt;
wobei der Ausgleichsventilschieber (3) in dem zweiten inneren Hauptventilschieber-Hohlraum (2C2) des Hauptventilschiebers (2) angeordnet ist und ein erstes Ende (3E1) angrenzend an die innere Hauptventilschieber-Hohlraum-Trennwand (2P) des Hauptventilschiebers (2) und ein zweites Ende (3E2) gegenüber dem ersten Ende (3E1) aufweist;
wobei das Ventil (1) weiterhin umfasst: einen Ausgleichsventilfedersitz (4), der in dem Ausgleichsventilfederhohlraum (20) des Hauptventilschiebers (2) angeordnet ist und ein Ende (4E) aufweist, das dem Ausgleichsventilschieber (3) zugewandt ist; und
eine Ausgleichsventilfeder (5, 6), die in dem Ausgleichsventilfederhohlraum (20) des Hauptventilschiebers (2) angeordnet und so konfiguriert ist, dass sie eine Kraft auf den Ausgleichventilfedersitz (4) ausübt, um den Ausgleichsventilfedersitz (4) in Richtung des Ausgleichsventilschiebers (3) vorzuspannen, so dass das Ende des Ausgleichsventilfedersitzes (4) gegen das zweite Ende (3E2) des Ausgleichsventilschiebers stößt und eine Druckkraft auf den Ausgleichsventilschieber (3) in eine Richtung von der zweiten Ausgleichsventilschieberposition zu der ersten Ausgleichsventilschieberposition ausübt.

4. Ventil nach Anspruch 3, wobei:
der Ausgleichsventilfedersitz (4) aufweist: einen Kopf (4H), dessen Ende dem Ausgleichsventilschieber (3) zugewandt ist; und eine Stange (4S), die in die Ausgleichsventilfeder (5, 6) eingesetzt ist, und
der Hauptventilschieber (2) weiterhin einen Stößel (7) aufweist, der ein Ende des Hauptventilschieber-Innenhohlraums (2B) des Hauptventilschiebers (2) verschließt und der so konfiguriert ist, dass er durch einen Anschlag gegen die Stange (4S) des Ausgleichsventilfedersitzes (4) eine Strecke, in der der Ausgleichsventilfedersitz (4) gleitet und somit eine Strecke, in der der Ausgleichsventilschieber (3) in eine Richtung von der ersten Ausgleichsventilschieberposition zu der zweiten Ausgleichsventilschieberposition gleitet, begrenzt.

5. Ventil nach Anspruch 3, wobei:
der erste Rückkopplungsdurchgang ein erstes Arbeitsanschluss-Druckerfassungsloch (21) aufweist, das durch die Hauptventilschieberwand (2W) des Hauptventilschiebers (2) in eine die axiale Richtung kreuzenden Richtung hindurchgeht und sich zu dem ersten inneren Hauptventilschieber-Hohlraum (2C1) öffnet, und in dem Zustand, in dem sich der Hauptventilschieber (2) in der Hauptventilbohrung (1C) in der ersten Hauptventilschieberposition befindet, das erste Arbeitsanschluss-Druckerfassungsloch (21) mit dem ersten Arbeitsanschluss (30) in Verbindung steht, so dass der erste Arbeitsanschluss (30) mit dem ersten inneren Hauptventilschieber-Hohlraum (2C1) des Hauptventilschiebers (2) durch das erste Arbeitsanschluss-Druckerfassungsloch (21) in Verbindung steht.

6. Ventil nach Anspruch 5, wobei:
der erste Rückkopplungsdurchgang ferner ein erstes Arbeitsanschlussdruck-Rückkopplungsloch (26) aufweist, das durch die Hauptventilschieberwand (2W) des Hauptventilschiebers in einer die axiale Richtung kreuzenden Richtung hindurchgeht und das sich zu dem ersten inneren Hauptventilschieber-Hohlraum (2C1) hin öffnet, und in dem Zustand, in dem sich der Hauptventilschieber (2) in der Hauptventilbohrung in der ersten Hauptventilschieberposition befindet, das erste Arbeitsanschluss-Druckrückführungsloch (26) mit dem Arbeitsanschluss-Druckerfassungshohlraum (32) in Verbindung steht, so dass der Arbeitsanschluss-Druckerfassungshohlraum (32) mit dem ersten Arbeitsanschluss über die erste Arbeitsanschluss-Druckrückführungsbohrung (30), den ersten Hauptventilschieber-Innenhohlraum (2C1) und die erste Arbeitsanschluss-Druckerfassungsbohrung (21) in Verbindung steht.

7. Ventil nach Anspruch 5, wobei:
die innere Hauptventilschieber-Hohlraum-Trennwand-Durchgangsöffnung (9) eine Dämpfungsöffnung ist, in dem Zustand, in dem der Hauptventilschieber (2) in der Hauptventilbohrung (1C) in der ersten Hauptventilschieberstellung ist, eine Öffnungskraft, die durch einen Druck in dem ersten Hauptventilschieber-Innenhohlraum (2C1) auf den Ausgleichsventilschieber (3) durch die Dämpfungsöffnung ausgeübt wird, größer ist als eine Kraft, die durch die Ausgleichsventilfeder (5, 6) auf den Ausgleichsventilschieber (3) ausgeübt wird, so dass der Ausgleichsventilschieber (3) gezwungen ist, sich von der ersten Ausgleichsventilschieberposition zu der zweiten Ausgleichsventilschieberposition zu bewegen.

8. Ventil nach Anspruch 6, wobei:
in dem Zustand, in dem sich der Hauptventilschieber (2) in der Hauptventilbohrung (1C) in der mittleren Hauptventilschieberposition befindet, das erste Arbeitsanschlussdruck-Rückkopplungsloch (26) in Verbindung mit dem Arbeitsanschlussdruck-Erfassungshohlraum (32) steht und das erste Arbeitsanschlussdruck-Erfassungsloch (21) in Verbindung mit der ersten Rücklauföffnung (R) steht, so dass der Arbeitsanschlussdruck-Erfassungshohlraum (32) mit der ersten Rücklauföffnung (R) durch das erste Arbeitsanschlussdruck-Rückkopplungsloch (26), den ersten inneren Hauptventilschieber-Hohlraum (2C) und das erste Arbeitsanschlussdruck-Erfassungsloch (21) in Verbindung steht;
in dem Zustand, in dem sich der Hauptventilschieber (2) in der Hauptventilschieberposition befindet, das erste Arbeitsanschlussdruck-Rückkopplungsloch (26) durch den Ventilgehäusekörper (1B) geschlossen ist, so dass das erste Arbeitsanschlussdruck-Rückkopplungsloch (26) von dem Arbeitsanschlussdruck-Erfassungshohlraum (32) getrennt ist, und der erste innere Hauptventilschieber-Hohlraum (2C1) mit der ersten Rücklauföffnung (R) durch das erste Arbeitsanschlussdruck-Erfassungsloch (21) in Verbindung steht.

9. Ventil nach Anspruch 5, wobei:
der zweite Rückführungsdurchgang ein zweites Arbeitsanschluss-Druckerfassungsloch (8) aufweist, das durch die Hauptventilschieberwand (2W) des Hauptventilschiebers (2) in einer die axiale Richtung kreuzenden Richtung hindurchgeht und sich zum Ausgleichsventilfederhohlraum (20) hin öffnet, ein Spalt zwischen dem Ausgleichsventilschieber (3) und einer Innenwand des Ausgleichsventilfederhohlraums (20) des Hauptventilschiebers vorhanden ist, und, wenn der Ausgleichsventilschieber (3) in jeder der ersten Ausgleichsventilschieberposition und der zweiten Ausgleichsventilschieberposition ist, der Ausgleichsventilfederhohlraum (20) durch den Spalt in Verbindung mit dem zweiten Arbeitsanschluss-Druckerfassungsloch (8) steht.

10. Ventil nach Anspruch 9, wobei:
eine Ausgleichsventilfedersitzaussparung (25) an eine Endfläche des Endes des Ausgleichsventilfedersitzes (4) an einem Außenumfang des Endes des Ausgleichsventilfedersitzes ausgebildet ist, und die Ausgleichventilfedersitzaussparung (25) in Verbindung mit einem Spalt steht, um einen Teil des Ausgleichsventilfederhohlraums (20) zu bilden.

11. Ventil nach Anspruch 9 oder 10, wobei:
der zweite Rückkopplungsdurchgang weiterhin ein zweites Arbeitsanschlussdruckrückkopplungsloch (27) aufweist, das durch die Hauptventilschieberwand (2B) des Hauptventilschiebers (2) in eine die axiale Richtung kreuzenden Richtung verläuft;
der zweite Rückkopplungsdurchgang weiterhin aufweist: ein Ausgleichsventilschieber-Verbindungsloch (15C), das in dem Ausgleichsventilschieberkörper (3) in einer die axiale Richtung kreuzenden Richtung ausgebildet ist, und ein Ausgleichsventilschieber-Axialloch (15), das in dem Ausgleichsventilschieberkörper (3B) im Wesentlichen in der axialen Richtung ausgebildet ist und das mit dem Ausgleichsventilschieber-Verbindungsloch (15C) in Verbindung steht;
der zweite Rückkopplungsdurchgang ferner eine Ausgleichsventil-Federsitznut (16) aufweist, die an einer Endfläche des Endes des Ausgleichsventil-Federsitzes (4) ausgebildet ist und sich in einer die axiale Richtung kreuzenden Richtung erstreckt, wobei die Ausgleichsventil-Federsitznut (16) sowohl mit dem Axialloch (15) des Ausgleichsventilschiebers als auch mit dem Ausgleichsventilfeder-Hohlraum (20) in Verbindung steht.

12. Ventil nach Anspruch 11, wobei:
in dem Zustand, in dem sich der Hauptventilschieber (2) in der Hauptventilbohrung in der mittleren Hauptventilschieberposition befindet, der Ausgleichsventilschieber (3) sich in der ersten Ausgleichsventilschieberposition befindet, das zweite Arbeitsanschlussdruck-Rückkopplungsloch (27) sowohl mit dem Arbeitsanschlussdruck-Erfassungshohlraum (32) als auch mit dem Ausgleichsventilschieber-Verbindungsloch (15C) in Verbindung steht, und die zweite Arbeitsanschlussdruck-Erfassungsbohrung (8) mit dem zweiten Rücklaufanschluss (36) in Verbindung steht, so dass der Arbeitsanschlussdruck-Erfassungshohlraum (32) über das zweite Arbeitsanschlussdruck-Rückkopplungsloch (27) das Ausgleichsventilschieber-Verbindungsloch (15C), die Ausgleichsventilschieber-Axialbohrung (15), die Ausgleichsventil-Federsitznut (16), den Ausgleichsventil-Federhohlraum (20) und das zweite Arbeitsanschlussdruck-Erfassungsloch (8) mit dem zweiten Rücklaufanschluss (36) in Verbindung steht,
Der Ausgleichsventilschieber (3) vorzugsweise umfasst ferner eine Ausgleichsventilschieber-Aussparung (22), die am Außenumfang des Ausgleichsventilschieberkörpers (3B) ausgebildet ist, wobei das Ausgleichsventilschieberverbindungsloch (15C) die zweite AusgleichsventilschieberAussparung (22) mit dem Ausgleichsventilschieber-Axialloch (15) verbindet und in dem Zustand, in dem sich der Hauptventilschieber in der Hauptventilbohrung in der mittleren Hauptventilschieberposition befindet, das zweite Arbeitsanschluss-Druckrückkopplungsloch (27) durch die zweite Ausgleichsventilschieber-Aussparung (22) mit dem Ausgleichsventilschieber-Verbindungsloch (15C) in Verbindung steht.

13. Ventil nach Anspruch 11, wobei:
in dem Zustand, in dem sich der Hauptventilschieber (2) in der Hauptventilbohrung (1C) in der ersten Hauptventilschieberposition befindet, der Ausgleichsventilschieber (3) sich in der zweiten Ausgleichsventilschieberposition befindet, so dass das zweite Ende (3E2) des Ausgleichsventilschiebers (3) in den Ausgleichsventilfederhohlraum (20) eintritt, der Ausgleichsventilfederhohlraum (20) über einen Spalt zwischen dem Ausgleichsventilfedersitz (4) und der Innenwand des Ausgleichsventilfederhohlraums (22) des Hauptventilschiebers (2) mit dem zweiten Rücklaufanschluss (30) den Spalt zwischen dem Ausgleichsventilschieber (3) und der Innenwand des Ausgleichsventilfederhohlraums (20) des Hauptventilschiebers (2) und das zweite Arbeitsanschlussdruck-Erfassungsloch (8) in Verbindung steht; und
in dem Zustand, in dem sich der Hauptventilschieber (2) in der Hauptventilbohrung (1C) in der ersten Hauptventilschieberposition befindet, das zweite Arbeitsanschlussdruck-Erfassungsloch (27) durch den Ventilgehäusekörper (1B) verschlossen ist, so dass das zweite Arbeitsanschlussdruck-Erfassungsloch (27) von dem Arbeitsanschlussdruck-Erfassungshohlraum (32) getrennt ist.

14. Ventil nach Anspruch 11, wobei:
in dem Zustand, in dem sich der Hauptventilschieber (2) in der Hauptventilbohrung (1C) in der zweiten Hauptventilschieberstellung befindet, das zweite Arbeitsanschlussdruck-Rückkopplungsloch (27) sowohl mit dem Arbeitsanschlussdruck-Erfassungshohlraum (32) als auch mit dem Ausgleichsventilschieber-Verbindungsloch (15C) in Verbindung steht, und das zweite Arbeitsanschlussdruck-Erfassungsloch (8) mit dem zweiten Arbeitsanschluss (34) in Verbindung steht, so dass der Arbeitsanschlussdruck-Erfassungshohlraum (32) mit dem zweiten Arbeitsanschluss (34) durch das zweite Arbeitsanschlussdruck-Rückkopplungsloch (27), das Ausgleichsventilschieber-Verbindungsloch (15C), das Ausgleichsventilschieber-Axialloch (15), die Ausgleichsventil-Federsitznut (16), den Ausgleichsventil-Federhohlraum (20) und das zweite Arbeitsanschlussdruck-Erfassungsloch (8) in Verbindung steht,
Der Ausgleichsventilschieber (3) vorzugsweise weiterhin eine zweite Ausgleichsventilschieberaussparung (22) aufweist, die am Außenumfang des Ausgleichsventilschieberkörpers (3B) ausgebildet ist, wobei das Ausgleichsventilschieber-Verbindungsloch (15C) die zweite Ausgleichsventilschieberaussparung (22) mit dem Ausgleichsventilschieber-Axialloch (15) verbindet und in dem Zustand, in dem sich der Hauptventilschieber (2) in der Hauptventilbohrung (1C) in der zweiten Hauptventilschieberposition befindet, das zweite Arbeitsanschlussdruck-Rückkopplungsloch (27) durch die zweite Ausgleichsventilschieberaussparung (22) mit dem Ausgleichsventilschieber-Verbindungsloch (15C) in Verbindung steht.

15. Ein hydraulisches System, das das Ventil (10) nach Anspruch 1 aufweist.

## Revendications

1. Soupape (100), comprenant
un carter de soupape (1) comprenant : un corps de carter de soupape (1B), un alésage de soupape principal (1C) s'étendant dans une direction axiale dans le corps de carter de soupape (1B) ; et un premier port de travail (30), un second port de travail (34), un port d'alimentation (S) comprenant un premier port d'alimentation (31) et un second port d'alimentation (33) et un port de retour (R) comprenant un premier port de retour (29) et un second port de retour (36) formés dans le corps de carter de soupape (1B) ;
une bobine de soupape principale (2) qui est disposée dans l'alésage de soupape principal (1C) du carter de soupape (1B) et qui peut coulisser dans l'alésage de soupape principal (1C) pour changer l'état de communication entre chacun des premier et second ports de travail (30, 34) et chacun des ports d'alimentation et de retour (S, R), la bobine de soupape principale (2) pouvant coulisser parmi une première position de bobine de soupape principale, une position médiane de bobine de soupape principale et une seconde position de bobine de soupape principale pour commander l'état de communication entre le premier port de travail (30) et chacun du premier port d'alimentation (31) et du premier port de retour (33), et l'état de communication entre le second port de travail (34) et chacun du second port d'alimentation (33) et du second port de retour (36), la bobine de soupape principale (2) comprenant :
un corps de bobine de soupape principale (2B), une cavité interne de bobine de soupape principale (2C) s'étendant dans la direction axiale dans le corps de bobine de soupape principal (2B) ;
une paroi de bobine de soupape principale (2W) entourant la cavité interne de bobine de soupape principale (2C) ;
un passage d'entrée (17) qui passe à travers la paroi de bobine de soupape principale (2W) dans une direction croisant la direction axiale et qui est configuré pour le second port de travail (34) ; et
un passage de sortie (TP) qui passe à travers la paroi de bobine de soupape principale (2W) dans une direction croisant la direction axiale, et qui a une entrée (TP1) en direction de la cavité interne de bobine de soupape principale (2C) et une sortie (TP2) en direction du corps de carter de soupape (1B) ; et
une bobine de soupape de contrebalance (3) qui est disposée dans la cavité interne de bobine de soupape principale (2C) de la bobine de soupape principale (2) et qui peut coulisser par rapport à la bobine de soupape principale (2) entre une première position de bobine de soupape de contrebalance et une seconde position de bobine de soupape de contrebalance, la bobine de soupape de contrebalance (3) comprenant :
un corps de bobine de soupape de contrebalance (3B) ; et
un premier creux de bobine de soupape de contrebalance (23) formé sur une périphérie extérieure du corps de bobine de soupape de contrebalance (3B),
dans laquelle dans un état où la bobine de soupape de contrebalance (3) est dans la première position de bobine de soupape de contrebalance, l'entrée (TP1) du passage de sortie (TP) de la bobine de soupape principale (3) est fermée par la bobine de soupape de contrebalance (3) ; et
dans un état où la bobine de soupape de contrebalance (3) est dans la seconde position de bobine de soupape de contrebalance, l'entrée (TP1) du passage de sortie (TP) de la bobine de soupape principale (2) est ouverte par la bobine de soupape de contrebalance (3) par le premier creux de bobine de soupape de contrebalance (23) de la bobine de soupape de contrebalance (3), de façon à ce que le second port de travail (34) soit en communication avec le port de retour (R) à travers le passage d'entrée (17) configuré pour le second port de travail (34), le premier creux de bobine de soupape de contrebalance (23) et le passage de sortie (TP), dans laquelle dans un état où la bobine de soupape principale est (2) dans la première position de bobine de soupape principale, le premier port de travail (30) est en communication avec le premier port d'alimentation (31), la bobine de soupape de contrebalance (3) est dans la seconde position de bobine de soupape de contrebalance et le second port de travail (34) est en communication avec le second port de retour (36) à travers le passage d'entrée (17) configuré pour le second port de travail (34), le premier creux de bobine de soupape de contrebalance (23) et le passage de sortie (TP) ;
dans un état où la bobine de soupape principale (2) est dans la position médiane de bobine de soupape principale, la bobine de soupape de contrebalance (3) est dans la première position de bobine de soupape de contrebalance, et le premier port de travail (30) et le second port de travail (34) sont déconnectés du premier port d'alimentation (31) et du second port d'alimentation (33) respectivement ; et
dans un état où la bobine de soupape principale (2) est dans la seconde position de bobine de soupape principale, la bobine de soupape de contrebalance (3) est dans la première position de bobine de soupape de contrebalance, le premier port de travail (30) est en communication avec le premier port de retour (29), et le second port de travail (34) est en communication avec le second port d'alimentation (33),
et **caractérisée en ce que**
le carter de soupape (1) comprend en outre une cavité de détection de pression de port de travail (32) formée dans le corps de carter de soupape (1B) et ouvrant vers l'alésage de soupape principale (1C), et un premier passage de retour et un second passage de retour sont formés dans la bobine de soupape principale (2), dans laquelle :
lorsque la bobine de soupape principale (2) est dans la position médiane de bobine de soupape principale, chacun des premier passage de retour et second passage de retour fait communiquer la cavité de détection de pression de port de travail (32) avec le port de retour (R) ;
lorsque la bobine de soupape principale (2) est dans la première position de bobine de soupape principale, le premier passage de retour fait communiquer la cavité de détection de pression de port de travail (32) avec le premier port de travail (30) et le second passage de retour est déconnecté de la cavité de détection de pression de port de travail (32) ;
lorsque la bobine de soupape principale (2) est dans la seconde position de bobine de soupape principale, le second passage de retour fait communiquer la cavité de détection de pression de port de travail (32) avec le second port de travail (34) et le premier passage de retour est déconnecté de la cavité de détection de pression de port de travail (32).

2. Soupape selon la revendication 1, dans laquelle :
le passage de sortie comprend une pluralité de sous-passages de sortie agencés dans la direction axiale de telle façon que plus la distance sur laquelle la bobine de soupape de contrebalance glisse est grande dans une direction allant de la première position de bobine de soupape de contrebalance vers la seconde position de bobine de soupape de contrebalance, plus il y a de sous-passages de sortie ouverts.

3. Soupape selon la revendication 1, dans laquelle :
la cavité interne de bobine de soupape principale (2C) de la bobine de soupape principale (2) comprend : des première et seconde cavités internes de bobine de soupape principale (2C1, 2C2) s'étendant dans la direction axiale dans le corps de bobine de soupape principal (2B) ; une cloison de séparation de cavité interne de bobine de soupape principale (2P) entre les première et seconde cavités internes de bobine de soupape principale (2C1, 2C2) ; un trou traversant de cloison de séparation de cavité interne de bobine de soupape principale (9) formé dans la cloison de séparation de cavité interne de bobine de soupape principale (2P) et faisant communiquer la première cavité interne de bobine de soupape principale (2C1) avec la seconde cavité interne de bobine de soupape principale (2C2) ; et une cavité de ressort de soupape de contrebalance (20) s'étendant de la seconde cavité interne de bobine de soupape principale (2C2) dans une direction à distance de la première cavité interne de bobine de soupape principale (2C1) ;
la bobine de soupape de contrebalance (3) est disposée dans la seconde cavité interne de bobine de soupape principale (2C2) de la bobine de soupape principale (2), et a une première extrémité (3E1) adjacente à la cloison de séparation de cavité interne de bobine de soupape principale (2P) de la bobine de soupape principale (2), et une seconde extrémité (3E2) opposée à la première extrémité (3E1) ;
la soupape (1) comprend en outre :
un siège de ressort de soupape de contrebalance (4) disposé dans la cavité de ressort de soupape de contrebalance (20) de la bobine de soupape principale (2) et ayant une extrémité (4E) orientée vers la bobine de soupape de contrebalance (3) ; et
un ressort de soupape de contrebalance (5, 6) disposé dans la cavité de ressort de soupape de contrebalance (20) de la bobine de soupape principale (2) et configuré pour appliquer une force au siège de ressort de soupape de contrebalance (4) pour décaler le siège de ressort de soupape de contrebalance (4) vers la bobine de soupape de contrebalance (3) de façon à ce que l'extrémité du siège de ressort de soupape de contrebalance (4) soit adjacente à la seconde extrémité (3E2) de la bobine de soupape de contrebalance et applique une force de poussée à la bobine de soupape de contrebalance (3) dans une direction allant de la seconde position de bobine de soupape de contrebalance vers la première position de bobine de soupape de contrebalance.

4. Soupape selon la revendication 3, dans laquelle :
le siège de ressort de soupape de contrebalance (4) comprend : une tête (4H) ayant l'extrémité orientée vers la bobine de soupape de contrebalance (3) ; et une tige (4S) insérée dans le ressort de soupape de contrebalance (5, 6), et
la bobine de soupape principale (2) comprend en outre un bouchon (7) qui ferme une extrémité de la cavité interne de bobine de soupape principale (2C) de la bobine de soupape principale (2), et qui est configuré pour restreindre, par une butée contre la tige (4S) du siège de ressort de soupape de contrebalance (4), une distance sur laquelle le siège de ressort de soupape de contrebalance (4) glisse, et ainsi une distance sur laquelle la bobine de soupape de contrebalance (3) glisse dans une direction allant de la première position de bobine de soupape de contrebalance vers la seconde position de bobine de soupape de contrebalance.

5. Soupape selon la revendication 3, dans laquelle :
le premier passage de retour comprend un premier trou d'acquisition de pression de port de travail (21) qui passe à travers la paroi de bobine de soupape principale (2W) de la bobine de soupape principale (2) dans une direction croisant la direction axiale et qui ouvre vers la première cavité interne de bobine de soupape principale (2C1), dans un état où la bobine de soupape principale (2) dans l'alésage de soupape principal (1C) est dans la première position de bobine de soupape principale, le premier trou d'acquisition de pression de port de travail (21) est en communication avec le premier port de travail (30) de façon à ce que le premier port de travail (30) soit en communication avec la première cavité interne de bobine de soupape principale (2C1) de la bobine de soupape principale (2) par le premier trou d'acquisition de pression de port de travail (21).

6. Soupape selon la revendication 5, dans laquelle :
le premier passage de retour comprend un premier trou de retour de pression de port de travail (26) qui passe à travers la paroi de bobine de soupape principale (2W) de la bobine de soupape principale (2) dans une direction croisant la direction axiale et qui ouvre vers la première cavité interne de bobine de soupape principale (2C1), dans l'état où la bobine de soupape principale (2) dans l'alésage de soupape principal est dans la première position de bobine de soupape principale, le premier trou de retour de pression de port de travail (26) est en communication avec la cavité de détection de pression de port de travail (32) de façon à ce que la cavité de détection de pression de port de travail (32) soit en communication avec le premier port de travail par le premier trou de retour de pression (26) de port de travail (30), la première cavité interne de bobine de soupape principale (2C1) et le premier trou d'acquisition de pression de port de travail (21).

7. Soupape selon la revendication 5, dans laquelle :
le trou traversant de cloison de séparation de cavité interne de bobine de soupape principale (9) est un trou d'amortissement, dans l'état où la bobine de soupape principale (2) dans l'alésage de soupape principal (1C) est dans la première position de bobine de soupape principale, une force d'ouverture appliquée à la bobine de soupape de contrebalance (3) à travers le trou d'amortissement par une pression dans la première cavité interne de bobine de soupape principale (2C1) est supérieure à une force appliquée à la bobine de soupape de contrebalance (3) par le ressort de soupape de contrebalance (5, 6), de telle façon que la bobine de soupape de contrebalance (3) est forcée de se déplacer de la première position de bobine de soupape de contrebalance vers la seconde position de bobine de soupape de contrebalance.

8. Soupape selon la revendication 6, dans laquelle :
dans l'état où la bobine de soupape principale (2) dans l'alésage de soupape principal (1C) est dans la position médiane de bobine de soupape principale, le premier trou de retour de pression de port de travail (26) est en communication avec la cavité de détection de pression de port de travail (32), et le premier trou d'acquisition de pression de port de travail (21) est en communication avec le premier port de retour (R), de façon à ce que la cavité de détection de pression de port de travail (32) soit en communication avec le premier port de retour (R) à travers le premier trou de retour de pression de port de travail (26), la première cavité interne de bobine de soupape principale (2C1) et le premier trou d'acquisition de pression de port de travail (21) ;
dans l'état où la bobine de soupape principale (2) est dans la seconde position de bobine de soupape principale, le premier trou de retour de pression de port de travail (26) est fermé par le corps de carter de soupape (1B) de façon à ce que le premier trou de retour de pression de port de travail (26) soit déconnecté de la cavité de détection de pression de port de travail (32), et la première cavité interne de bobine de soupape principale (2C1) est en communication avec le premier port de retour (R) à travers le premier trou d'acquisition de pression de port de travail (21).

9. Soupape selon la revendication 5, dans laquelle :
le second passage de retour comprend un second trou d'acquisition de pression de port de travail (8) qui passe à travers la paroi de bobine de soupape principale (2W) de la bobine de soupape principale (2) dans une direction croisant la direction axiale et qui ouvre vers la cavité de ressort de soupape de contrebalance (20), il y a un espace entre la bobine de soupape de contrebalance (3) et une paroi intérieure de la cavité de ressort de soupape de contrebalance (20) de la bobine de soupape principale (2), et lorsque la bobine de soupape de contrebalance (3) est dans chacune de la première position de soupape de contrebalance et seconde position de soupape de contrebalance, la cavité de ressort de soupape de contrebalance (20) est en communication avec le second trou d'acquisition de pression de port de travail (8) à travers l'espace.

10. Soupape selon la revendication 9, dans laquelle :
un creux de siège de ressort de soupape de contrebalance (25) est formé sur une surface d'extrémité de l'extrémité du siège de ressort de soupape de contrebalance (4) sur une périphérie extérieure de l'extrémité du siège de ressort de soupape de contrebalance, et le creux de siège de ressort de soupape de contrebalance (25) et en communication avec l'espace pour constituer une partie de la cavité de ressort de soupape de contrebalance (20) .

11. Soupape selon la revendication 9 ou 10, dans laquelle :
le second passage de retour comprend en outre un second trou de retour de pression de port de travail (27) qui passe à travers la paroi de bobine de soupape principale (2W) de la seconde bobine principale (2) dans une direction croisant la direction axiale,
le second passage de retour comprend en outre : un trou de communication de bobine de soupape de contrebalance (15C) formé dans le corps de bobine de soupape de contrebalance (3) est dans une direction croisant la direction axiale, et un trou axial de bobine de soupape de contrebalance (15) qui est formé dans le corps de bobine de soupape de contrebalance (3B) essentiellement dans la direction axiale et qui est en communication avec le trou de communication de bobine de soupape de contrebalance (15C) ;
le second passage de retour comprend en outre une rainure de siège de ressort de soupape de contrebalance (16) formée à une surface d'extrémité de l'extrémité du siège de ressort de soupape de contrebalance (4) et s'étendant dans une direction croisant la direction axiale, la rainure de siège de ressort de soupape de contrebalance (16) est en communication avec à la fois le trou axial de bobine de soupape de contrebalance (15) et la cavité de ressort de soupape de contrebalance (20).

12. Soupape selon la revendication 11, dans laquelle :
dans l'état où la bobine de soupape principale (2) dans l'alésage de soupape principal (16) est dans la position médiane de bobine de soupape principale, la bobine de soupape de contrebalance (3) est dans la première position de bobine de soupape de contrebalance, le second trou de retour de pression de port de travail (27) est en communication avec à la fois la cavité de détection de pression de port de travail (32) et le trou de communication de bobine de soupape de contrebalance (15C), et le second trou d'acquisition de pression de port de travail (8) est en communication avec le second port de retour (36) de façon à ce que la cavité de détection de pression de port de travail (32) soit en communication avec le second port de retour (36) à travers le second trou de retour de pression de port de travail (27), le trou de communication de bobine de soupape de contrebalance (15C), le trou axial de bobine de soupape de contrebalance (15), la rainure de siège de ressort de soupape de contrebalance (16), la cavité de ressort de soupape de contrebalance (20) et le second trou d'acquisition de pression de port de travail (8),
de préférence, la bobine de soupape de contrebalance (3) comprend en outre : un second creux de bobine de soupape de contrebalance (22) formé sur la périphérie extérieure du corps de bobine de soupape de contrebalance (3B), le trou de communication de bobine de soupape de contrebalance (15C) fait communiquer le second creux de bobine de soupape de contrebalance (22) avec le trou axial de bobine de soupape de contrebalance (15), et dans l'état où la bobine de soupape principale dans l'alésage de soupape principal est dans la position médiane de soupape principale, le second trou de retour de pression de port de travail (27) est en communication avec le trou de communication de bobine de soupape de contrebalance (15C) à travers le second creux de bobine de soupape de contrebalance (22).

13. Soupape selon la revendication 11, dans laquelle :
dans l'état où la bobine de soupape principale (2) dans l'alésage de soupape principal (1C) est dans la première position de bobine de soupape principale, la bobine de soupape de contrebalance (3) est dans la seconde position de bobine de soupape de contrebalance de façon à ce que la seconde extrémité (3E2) de la bobine de soupape de contrebalance (3) pénètre la cavité de ressort de soupape de contrebalance (20), la cavité de ressort de soupape de contrebalance (20) est en communication avec le second port de retour (36) à travers un espace entre le siège de ressort de soupape de contrebalance (4) et la paroi intérieure de la cavité de ressort de soupape de contrebalance (22) de la bobine de soupape principale (2), l'espace entre la bobine de soupape de contrebalance (3) et la paroi intérieure de la cavité de ressort de soupape de contrebalance (20) de la bobine de soupape principale (2), et le second trou d'acquisition de pression de port de travail (8) ; et
dans l'état où la bobine de soupape principale (2) dans l'alésage de soupape principal (1C) est dans la première position de bobine de soupape principale, le second trou de retour de pression de port de travail (27) est fermé par le corps de carter de soupape (1B) de façon à ce que le second trou de retour de pression de port de travail (27) soit déconnecté de la cavité de détection de pression de port de travail (32).

14. Soupape selon la revendication 11, dans laquelle :
dans l'état où la bobine de soupape principale (2) dans l'alésage de soupape principal (1C) est dans la seconde position de bobine de soupape principale, le second trou de retour de pression de port de travail (27) est en communication avec à la fois la cavité de détection de pression de port de travail (32) et le trou de communication de bobine de soupape de contrebalance (15C), et le second trou d'acquisition de pression de port de travail (8) est en communication avec le second port de travail (34), de façon à ce que la cavité de détection de pression de port de travail (32) soit en communication avec le second port de travail (34) à travers le second trou de retour de pression de port de travail (27), le trou de communication de bobine de soupape de contrebalance (15C), le trou axial de bobine de soupape de contrebalance (15), la rainure de siège de ressort de soupape de contrebalance (16), la cavité de ressort de soupape de contrebalance (20) et le second trou d'acquisition de pression de port de travail (8),
de préférence, la bobine de soupape de contrebalance (3) comprend en outre : un second creux de bobine de soupape de contrebalance (22) formé sur la périphérie extérieure du corps de bobine de soupape de contrebalance (3B), le trou de communication de bobine de soupape de contrebalance (15C) fait communiquer le second creux de bobine de soupape de contrebalance (22) avec le trou axial de bobine de soupape de contrebalance (15), et dans l'état où la bobine de soupape principale (2) dans l'alésage de soupape principal (1C) est dans la seconde position de soupape principale, le second trou de retour de pression de port de travail (27) est en communication avec le trou de communication de bobine de soupape de contrebalance (15C) à travers le creux de bobine de soupape de contrebalance (22).

15. Système hydraulique (200) comprenant :
la soupape (10) de la revendication 1.
